# EUROPEAN PATENT APPLICATION

(11) **EP 2 978 252 A1**
(43) Date of publication of application: **27.01.2016**
(21) Application number: 13880673.2
(22) Date of filing: 25.03.2013
(51) Int. Cl.: H04W 24/02, H04W 76/02, H04W 24/10, H04W 36/08

(54) **MINIMIZED DRIVE TEST PROCESSING METHOD, NETWORK DEVICE, AND COMMUNICATIONS SYSTEM**

(71) Applicant: Huawei Technologies Co., Ltd., Longgang District Shenzhen, Guangdong 518129 (CN)
(72) Inventor: XU, Yixian, Shenzhen Guangdong 518129 (CN); CHEN, Jing, Shenzhen Guangdong 518129 (CN); ZHAO, Dong, Shenzhen Guangdong 518129 (CN); ZOU, Lan, Shenzhen Guangdong 518129 (CN)
(74) Representative: Pfenning, Meinig & Partner mbB
(86) International application number: PCT/CN2013/073156
(87) International publication number: WO 2014/153714

(57) **Abstract**

The present invention relates to the field of communications, and in particular, to a processing method for minimization of drive tests, a network device, and a communications system. The method includes: obtaining, by a first network device, a virtual identity, where the virtual identity is corresponding to a real identity of a terminal; and sending, by the first network device, the virtual identity of the terminal performing minimization of drive tests and minimization of drive tests information, where the minimization of drive tests information includes at least one of a minimization of drive tests result and a trace recording session reference. According to the present invention, some measurement results can be mapped to same UE without exposing user privacy.

## Description

### TECHNICAL FIELD

The present invention relates to the field of communications, and in particular, to a processing method for minimization of drive tests, a network device, and a communications system.

### BACKGROUND

Currently, in systems of operators, validity of all planning and adjustments performed on communications systems, for example, C&C (coverage and capacity) optimization, mobility optimization, common channel parameter optimization, and QoS (Quality of Service, quality of service) verification, needs to be inspected through a manual drive test, so as to ensure that the performed optimization is qualified. However, labor expenses for performing network detection through a manual drive test are high. In order to reduce the labor expenses, a 3GPP MDT (Minimized Drive Test, minimization of drive tests) project is put forward. The 3GPP MDT project modifies a signaling process or an OAM (Operation Administration and Maintenance, operation administration and maintenance) process, so that operators can collect desired wireless data as required by using a terminal camping on a network, instead of by manual collection, thereby improving the network planning and optimization efficiency, and meeting requirements on network verification and information feedback at minimum costs.

Currently, the 3GPP MDT is categorized into two types: area based MDT (that is, Area based MDT) and signaling based MDT. For the foregoing two types of MDT, an IRPAgent (integration reference point agent) specifies an MDT configuration parameter for a related network element, and sends a request for activating an MDT task. In this process, for the area based MDT, a corresponding network element, such as an eNodeB (evolved Node B, evolved base station) or an RNC (Radio Network Controller, radio network controller), selects, according to a given MDT selection condition, UE used for the MDT task, and then delivers a detection instruction to the UE; the selected UE sends an MDT measurement result to each related network element according to the MDT configuration parameter regularly or in a manner of being triggered by an event; and the related network element forwards the received measurement result to TCE (Trace Collection Equipment, trace collection equipment), to complete a measurement and sending process. Currently, when the related network element sends the MDT measurement result to the TCE, an anonymous mechanism is used, that is, only the measurement result is reported, and UE that sends the measurement result is not reported. However, for features of some SONs (Self Organizing Networks, self organizing networks), such as CCO (Capacity and Coverage Optimization, capacity and coverage optimization), the TCE needs to know measure results that are corresponding to same UE. However, according to a privacy security rule, the measurement result includes some sensitive information, such as location information of the UE, and the TCE cannot be informed of such information. According to the existing anonymous mechanism for MDT, neither an E-UTRAN (Evolved Universal Terrestrial Radio Access Network, evolved universal terrestrial radio access network) nor a UTRAN (Universal Terrestrial Radio Access Network, universal terrestrial radio access network) can meet a requirement of mapping some measurement results to same UE without exposing user privacy.

### SUMMARY

In view of this, the present invention provides a processing method for minimization of drive tests, a network device, and a communications system, which can map some measurement results to same UE without exposing user privacy.

A first aspect of the present invention provides a processing method for minimization of drive tests, which may include:
obtaining, by a first network device, a virtual identity, where the virtual identity is corresponding to a real identity of a terminal;
sending, by the first network device, the virtual identity of the terminal performing minimization of drive tests and minimization of drive tests information, where the minimization of drive tests information includes at least one of a minimization of drive tests result and a trace recording session reference.

With reference to the first aspect, in a first possible implementation manner, the obtaining, by a first network device, a virtual identity includes:
generating, by the first network device, the virtual identity; or
acquiring, by the first network device, the virtual identity from a second network device.

With reference to the first possible implementation manner of the first aspect, in a second possible implementation manner,
before the generating, by the first network device, the virtual identity, the method further includes:
determining, by the first network device, whether user consent information exists, and when the user consent information exists, generating the virtual identity; or
after the second network device determines that user consent information exists, acquiring, by the first network device, the virtual identity from the second network device; or
after the acquiring, by the first network device, the virtual identity from a second network device, the method further includes:
   determining, by the first network device, whether user consent information exists, and when the user consent information exists, storing the virtual identity acquired from the second network device.

With reference to any one of the first aspect to the second possible implementation manner of the first aspect, in a third possible implementation manner, the first network device is an access network device; and
before the sending, by the first network device, the virtual identity of a terminal performing minimization of drive tests and minimization of drive tests information, the method further includes:
detecting, by the first network device, an anonymous manner for minimization of drive tests; and
when the anonymous manner is that a virtual identity of a terminal needs to be sent, sending, by the first network device, the virtual identity of the terminal performing minimization of drive tests and the minimization of drive tests information.

With reference to the third possible implementation manner of the first aspect, in a fourth possible implementation manner, the access network device includes either of a radio network controller RNC and an evolved base station eNodeB; and
when the first network device is the RNC, the second network device includes any one of a serving GPRS support node SGSN, a mobile switching center MSC, a visitor location register VLR, a gateway GPRS support node GGSN, and a broadcast multicast service center BM-SC; or
when the first network device is the eNodeB, the second network device includes either of a mobility management entity MME and a call session control function entity CSCF.

With reference to any one of the first aspect to the second possible implementation manner of the first aspect, in a fifth possible implementation manner, the first network device is a core network device, and before the sending, by the first network device, the virtual identity of a terminal performing minimization of drive tests and minimization of drive tests information, the method further includes:
receiving anonymous manner indication information from an access network side, where the anonymous manner indication information is used to indicate that an anonymous manner is that a virtual identity of a terminal needs to be sent.

With reference to the fifth possible implementation manner of the first aspect, in a sixth possible implementation manner, the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF; and
when the first network device includes any one of the serving GPRS support node SGSN, the mobile switching center MSC, the visitor location register VLR, the gateway GPRS support node GGSN, and the broadcast multicast service center BM-SC, the anonymous manner indication information is received from a radio network controller RNC on the access network side; or
when the first network device is either of the mobility management entity MME and the call session control function entity CSCF, the anonymous manner indication information is received from an evolved base station eNodeB on the access network side.

With reference to the sixth possible implementation manner of the first aspect, in a seventh possible implementation manner, the anonymous manner indication information is carried in an uplink information exchange request message sent by the RNC.

With reference to the seventh possible implementation manner of the first aspect, in an eighth possible implementation manner, the anonymous manner indication information is carried in a privacy indicator newly added in the uplink information exchange request message; or
the anonymous manner indication information is a message body newly added in the uplink information exchange request message.

With reference to the sixth possible implementation manner of the first aspect, in a ninth possible implementation manner, the anonymous manner indication information is carried in a cell traffic trace message sent by the eNodeB.

With reference to the ninth possible implementation manner of the first aspect, in a tenth possible implementation manner, the anonymous manner indication information is carried in a privacy indicator newly added in the cell traffic trace message; or
the anonymous manner indication information is an extended value of an original privacy indicator in the cell traffic trace message.

With reference to the sixth possible implementation manner of the first aspect, in an eleventh possible implementation manner, when the core network device is either of a mobility management entity MME and a call session control function entity CSCF, the second network device is a home subscriber server HSS or an evolved base station eNodeB.

With reference to the first possible implementation manner of the first aspect, in a twelfth possible implementation manner,
the first network device is the terminal performing minimization of drive tests, and the second network device includes a core network device, where the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF.

With reference to any one of the first aspect to the tenth possible implementation manner of the first aspect, in a thirteenth possible implementation manner,
the virtual identity includes: any one of a newly added dedicated identifier, a temporary mobile station identifier TMSI, a globally unique temporary identity GUTI, an evolved base station S1 interface application protocol identity eNodeB S1-AP UE ID, a mobility management entity S1 interface application protocol identity MME S1-AP UE ID, a trace recording session reference + user serving cell identifier TRSR + CGI, and a cell radio network temporary identity C-RNTI, or a combination thereof.

A second aspect of embodiments of the present invention provides a network device, which may include:
an obtaining module, configured to obtain a virtual identity, where the virtual identity is corresponding to a real identity of a terminal; and
a sending module, configured to send the virtual identity, obtained by the obtaining module, of the terminal performing minimization of drive tests and minimization of drive tests information, where the minimization of drive tests information includes at least one of a minimization of drive tests result and a trace recording session reference.

With reference to the second aspect, in a first possible implementation manner,
the obtaining module includes at least one of a generating unit and an obtaining unit, where
the generating unit is configured to generate the virtual identity; and
the obtaining unit is configured to acquire the virtual identity from another network node except the network device.

With reference to the first possible implementation manner of the second aspect, in a second possible implementation manner, when the obtaining module includes the generating unit, the network device further includes:
a first determining module, configured to determine whether user consent information exists, where when the user consent information exists, the generating unit generates the virtual identity.

With reference to the first possible implementation manner of the second aspect, in a third possible implementation manner, when the obtaining module includes the obtaining unit, the obtaining unit is specifically configured to: after the another network node except the network device determines that user consent information exists, acquire the virtual identity from the another network node except the network device; or
the network device further includes:
a second determining module, configured to determine whether user consent information exists, and when the user consent information exists, store the virtual identity acquired from the another network node except the network device.

With reference to any one of the first possible implementation manner to the third possible implementation manner of the second aspect, in a fourth possible implementation manner, the network device is an access network device, and the network device further includes:
an anonymous detection module, configured to detect an anonymous manner for minimization of drive tests, where
if the anonymous detection module detects that the anonymous manner is that a virtual identity of a terminal needs to be sent, the sending module sends the virtual identity of the terminal performing minimization of drive tests and the minimization of drive tests information.

With reference to the fourth possible implementation manner of the second aspect, in a fifth possible implementation manner, the access network device includes either of a radio network controller RNC and an evolved base station eNodeB; and
when the access network device is the RNC, the another network node except the network device includes any one of a serving GPRS support node SGSN, a mobile switching center MSC, a visitor location register VLR, a gateway GPRS support node GGSN, and a broadcast multicast service center BM-SC; or
when the access network device is the eNodeB, the another network node except the network device includes either of a mobility management entity MME and a call session control function entity CSCF.

With reference to any one of the first possible implementation manner to the third possible implementation manner of the second aspect, in a sixth possible implementation manner, the network device is a core network device, and the network device further includes:
a receiving module, configured to receive anonymous manner indication information from an access network side, where the anonymous manner indication information is used to indicate that an anonymous manner is that a virtual identity of a terminal needs to be sent.

With reference to the sixth possible implementation manner of the second aspect, in a seventh possible implementation manner, the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF; and
when the network device includes any one of the serving GPRS support node SGSN, the mobile switching center MSC, the visitor location register VLR, the gateway GPRS support node GGSN, and the broadcast multicast service center BM-SC, the receiving module is specifically configured to receive the anonymous manner indication information from a radio network controller RNC on the access network side; or
when the network device is either of the mobility management entity MME and the call session control function entity CSCF, the receiving module is specifically configured to receive the anonymous manner indication information from an evolved base station eNodeB on the access network side.

With reference to the seventh possible implementation manner of the second aspect, in an eighth possible implementation manner, the anonymous manner indication information is carried in an uplink information exchange request message sent by the RNC.

With reference to the eighth possible implementation manner of the second aspect, in a ninth possible implementation manner, the anonymous manner indication information is carried in a privacy indicator newly added in the uplink information exchange request message; or
the anonymous manner indication information is a message body newly added in the uplink information exchange request message.

With reference to the seventh possible implementation manner of the second aspect, in a tenth possible implementation manner, the anonymous manner indication information is carried in a cell traffic trace message sent by the eNodeB.

With reference to the tenth possible implementation manner of the second aspect, in an eleventh possible implementation manner, the anonymous manner indication information is carried in a privacy indicator newly added in the cell traffic trace message; or
the anonymous manner indication information is an extended value of an original privacy indicator in the cell traffic trace message.

With reference to the seventh possible implementation manner of the second aspect, in a twelfth possible implementation manner, when the core network device is either of a mobility management entity MME and a call session control function entity CSCF, the another network node except the network device is a home subscriber server HSS or an evolved base station eNodeB.

With reference to the first possible implementation manner of the second aspect, in a thirteenth possible implementation manner, the network device is the terminal performing minimization of drive tests, and the another network node except the network device includes a core network device, where the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF.

With reference to the second aspect to the thirteenth possible implementation manner of the second aspect, in a fourteenth possible implementation manner, the virtual identity includes: any one of a newly added dedicated identifier, a temporary mobile station identifier TMSI, a globally unique temporary identity GUTI, an evolved base station S1 interface application protocol identity eNodeB S1-AP UE ID, a mobility management entity S1 interface application protocol identity MME S1-AP UE ID, a trace recording session reference + user serving cell identifier TRSR + CGI, and a cell radio network temporary identity C-RNTI, or a combination thereof.

A third aspect of the present invention provides a communications system, which may include: the network device described in embodiments of the present invention and trace collection equipment, where the trace collection equipment is configured to receive a virtual identity, sent by the network device, of a terminal performing minimization of drive tests and minimization of drive tests information, and map the virtual identity of the terminal performing minimization of drive tests to a minimization of drive tests result of the terminal performing minimization of drive tests, where the minimization of drive tests information includes at least one of the minimization of drive tests result and a trace recording session reference.

With reference to the third aspect, in a first possible implementation manner, when the network device includes an obtaining unit, the communications system further includes:
a second network device, configured to generate the virtual identity corresponding to a real identity of the terminal.

A fourth aspect of the present invention provides a network device, including a memory and a processor, where the memory stores program code, and the processor invokes the program code stored in the memory, to perform the following operations:
obtaining a virtual identity, where the virtual identity is corresponding to a real identity of a terminal; and
sending the virtual identity of the terminal performing minimization of drive tests and minimization of drive tests information, where the minimization of drive tests information includes at least one of a minimization of drive tests result and a trace recording session reference.

With reference to the fourth aspect, in a first possible implementation manner, the obtaining, by the processor, a virtual identity specifically includes:
generating the virtual identity of the terminal; or
acquiring the virtual identity from another network node except the network device.

With reference to the first possible implementation manner of the fourth aspect, in a second possible implementation manner,
before generating the virtual identity, the processor performs the following operations: determining whether user consent information exists, and when the user consent information exists, generating the virtual identity; or
after the another network node except the network device determines that user consent information exists, acquiring, by the processor, the virtual identity from the another network node except the network device; or
after acquiring the virtual identity from the another network node except the network device, the processor further performs the following operations:
determining whether user consent information exists, and when the user consent information exists, storing the virtual identity acquired from the another network node except the network device.

With reference to any one of the fourth aspect to the second possible implementation manner of the first aspect, in a third possible implementation manner, the network device is an access network device; and
before sending the virtual identity of the terminal performing minimization of drive tests, the processor further performs the following operations:
detecting an anonymous manner for minimization of drive tests; and
when the anonymous manner is that a virtual identity of a terminal needs to be sent, sending the virtual identity of the terminal performing minimization of drive tests and the minimization of drive tests information.

With reference to the third possible implementation manner of the first aspect, in a fourth possible implementation manner, the access network device includes either of a radio network controller RNC and an evolved base station eNodeB; and
when the network device is the RNC, the another network node except the network device includes any one of a serving GPRS support node SGSN, a mobile switching center MSC, a visitor location register VLR, a gateway GPRS support node GGSN, and a broadcast multicast service center BM-SC; or
when the network device is the eNodeB, the another network node except the network device includes either of a mobility management entity MME and a call session control function entity CSCF.

With reference to any one of the fourth aspect to the second possible implementation manner of the fourth aspect, in a fifth possible implementation manner, the network device is a core network device, and before sending the virtual identity of the terminal performing minimization of drive tests and the minimization of drive tests information, the processor further performs the following operation:
receiving anonymous manner indication information from an access network side, where the anonymous manner indication information is used to indicate that an anonymous manner is that a virtual identity of a terminal needs to be sent.

With reference to the fifth possible implementation manner of the fourth aspect, in a sixth possible implementation manner, the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF; and
when the network device includes any one of the serving GPRS support node SGSN, the mobile switching center MSC, the visitor location register VLR, the gateway GPRS support node GGSN, and the broadcast multicast service center BM-SC, the processor is specifically configured to receive the anonymous manner indication information from a radio network controller RNC on the access network side; or
when the network device is either of the mobility management entity MME and the call session control function entity CSCF, the processor is specifically configured to receive the anonymous manner indication information from an evolved base station eNodeB on the access network side.

With reference to the sixth possible implementation manner of the fourth aspect, in a seventh possible implementation manner, the anonymous manner indication information is carried in an uplink information exchange request message sent by the RNC.

With reference to the seventh possible implementation manner of the fourth aspect, in an eighth possible implementation manner, the anonymous manner indication information is carried in a privacy indicator newly added in the uplink information exchange request message; or
the anonymous manner indication information is a message body newly added in the uplink information exchange request message.

With reference to the sixth possible implementation manner of the fourth aspect, in a ninth possible implementation manner, the anonymous manner indication information is carried in a cell traffic trace message sent by the eNodeB.

With reference to the ninth possible implementation manner of the fourth aspect, in a tenth possible implementation manner, the anonymous manner indication information is carried in a privacy indicator newly added in the cell traffic trace message; or
the anonymous manner indication information is an extended value of an original privacy indicator in the cell traffic trace message.

With reference to the sixth possible implementation manner of the fourth aspect, in an eleventh possible implementation manner, when the network device is either of a mobility management entity MME and a call session control function entity CSCF, the another network node except the network device is a home subscriber server HSS or an evolved base station eNodeB.

With reference to the first possible implementation manner of the fourth aspect, in a twelfth possible implementation manner, the network device is the terminal performing minimization of drive tests, and the another network node except the network device includes a core network device, where the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF.

With reference to any one of the fourth aspect to the tenth possible implementation manner of the first aspect, in a thirteenth possible implementation manner, the virtual identity includes: any one of a newly added dedicated identifier, a temporary mobile station identifier TMSI, a globally unique temporary identity GUTI, an evolved base station S1 interface application protocol identity eNodeB S1-AP UE ID, a mobility management entity S1 interface application protocol identity MME S1-AP UE ID, a trace recording session reference + user serving cell identifier TRSR + CGI, and a cell radio network temporary identity C-RNTI, or a combination thereof.

A fifth aspect of the embodiments of the present invention provides a computer program product, including a computer readable medium, where the computer readable medium includes a set of program code that is used to perform the method according to the first aspect or any possible implementation manner of the first aspect.

It can be seen from the foregoing that, in the embodiments of the present invention, before or during a process of minimization of drive tests, a first network device generates a virtual identity corresponding to a real identity of a terminal performing minimization of drive tests, or acquires, from another network node except a network device, a virtual identity corresponding to a real identity of a terminal performing minimization of drive tests; and after the terminal performing minimization of drive tests completes minimization of drive tests, the first network device sends the virtual identity of the terminal performing minimization of drive tests and minimization of drive tests information. In the embodiments of the present invention, because the identity of the terminal performing minimization of drive tests is sent with the minimization of drive tests information, a device (such as TCE) receiving the sent content can directly map some measurement results to same UE according to the sent content. In addition, in the embodiments of the present invention, the virtual identity instead of the real identity of the terminal is sent, which does not expose terminal privacy.

### BRIEF DESCRIPTION OF DRAWINGS

FIG. 1 is a schematic flowchart of a first embodiment of a processing method for minimization of drive tests according to the present invention;
FIG. 2 is a schematic flowchart of a first embodiment of a processing method for minimization of drive tests according to the present invention;
FIG. 3 is a schematic process and architectural diagram of a first embodiment of area based MDT in a UTRAN network;
FIG. 4a is a schematic process and architectural diagram of a second embodiment of area based MDT in a UTRAN network;
FIG. 4b is a schematic process and architectural diagram of a second embodiment of area based MDT in a UTRAN network;
FIG. 5 is a schematic process and architectural diagram of a first embodiment of area based MDT in an E-UTRAN network;
FIG. 6 is a schematic process and architectural diagram of a second embodiment of area based MDT in an E-UTRAN network;
FIG. 7 is a schematic structural composition diagram of an embodiment of a network device according to the present invention;
FIG. 8 is a schematic structural composition diagram of an embodiment of an obtaining module in FIG. 7;
FIG. 9 is a schematic structural composition diagram of another embodiment of a network device according to the present invention;
FIG. 10 is a schematic structural composition diagram of another embodiment of a network device according to the present invention;
FIG. 11 is a schematic structural composition diagram of another embodiment of a network device according to the present invention;
FIG. 12 is a schematic structural composition diagram of another embodiment of a network device according to the present invention;
FIG. 13 is a schematic structural composition diagram of another embodiment of a network device according to the present invention; and
FIG. 14 is a schematic structural composition diagram of an embodiment of a communications system according to the present invention.

### DESCRIPTION OF EMBODIMENTS

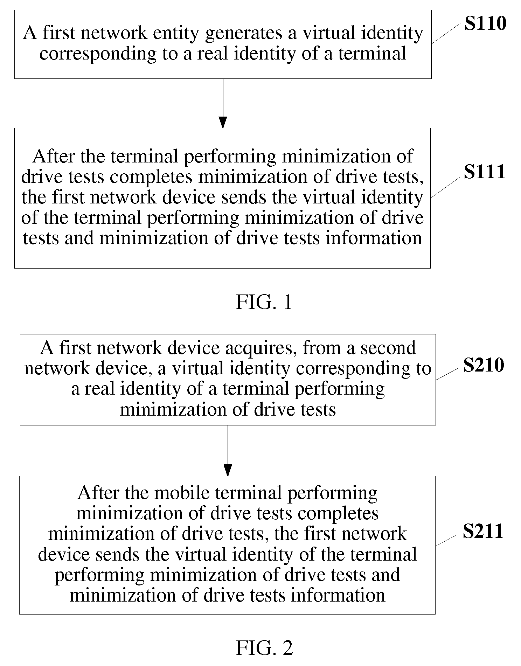

FIG. 1 is a schematic flowchart of a first embodiment of a processing method for minimization of drive tests according to the present invention. As shown in FIG. 1, the method may include:

Step S110: A first network device generates a virtual identity corresponding to a real identity of a terminal.

Step S111: After the terminal performing minimization of drive tests completes minimization of drive tests, the first network device sends the virtual identity of the terminal performing minimization of drive tests and minimization of drive tests information, where the minimization of drive tests information includes at least one of a minimization of drive tests result and a TRSR (Trace Recording Session Reference, trace recording session reference).

In specific implementation, in step S110, the first network device may generate, during a process of minimization of drive tests, the virtual identity corresponding to the real identity of the terminal, or pre-generate, before minimization of drive tests is performed, the virtual identity corresponding to the real identity of the terminal.

In specific implementation, the real identity includes either of an IMEI (International Mobile Equipment Identity, international mobile equipment identity) and an IMSI (International Mobile Subscriber Identity, international mobile subscriber identity).

In specific implementation, the virtual identity includes: any one of a newly added dedicated identifier (for example, the newly added dedicated identifier may be recorded as an MDT-pseudo-ID), a TMSI (Temporary Mobile Station Identifier, temporary mobile station identifier), a GUTI (Globally Unique Temporary Identity, globally unique temporary identity), an evolved base station S1 interface application protocol identity (eNodeB S1-AP UE ID), a mobility management entity S1 interface application protocol identity (MME S1-AP UE ID), a TRSR (Trace Recording Session Reference, trace recording session reference) + CGI (UE's serving cell, user serving cell identifier), and a C-RNTI (Cell Radio Network Temporary Identity, cell radio network temporary identity), or a combination thereof. An identifier of a device (such as an identifier of TCE) configured to receive a sending result of the virtual identity may further be bound to the virtual identity, so that the virtual identity can only be sent to a device to which the virtual identity is bound, thereby improving security.

In specific implementation, in different network environments, the first network device may be different devices. For example, in a UTRAN (Universal Terrestrial Radio Access Network, universal terrestrial radio access network) network, the first network device may include any one of a newly added device dedicated for generating the virtual identity, an SGSN (Serving GPRS Support Node, serving GPRS support node), an MSC (Mobile Switching Centre, mobile switching centre), a GGSN (Gateway GPRS Support Node, gateway GPRS support node), a VLR (Visitor Location Register, visitor location register), a BM-SC (Broadcast Multicast Service Center, broadcast multicast service center), an RNC (Radio Network Controller, radio network controller), and a terminal. However, in an E-UTRAN (Evolved Universal Terrestrial Radio Access Network, evolved universal terrestrial radio access network) network, the first network device may include any one of a newly added device dedicated for generating the virtual identity, an MME (Mobility Management Entity, mobility management entity), a CSCF (Call Session Control Function, call session control function), an eNodeB (evolved Node B, evolved base station), and a terminal.

In specific implementation, in step S110, when generating the virtual identity corresponding to the real identity of the terminal, the first network device may store a correspondence between the real identity of the terminal and the virtual identity.

In some feasible implementation manners, before step S110, the method may further include:

The first network device determines whether user consent information (user consent) exists; if the first network device determines that the user consent information exists, the first network device generates the virtual identity corresponding to the real identity of the terminal; and if the first network device determines that the user consent information does not exist, the first network device does not generate the virtual identity corresponding to the real identity of the terminal performing minimization of drive tests. A purpose of the step is generating virtual identity information with user consent, which further ensures security of user privacy.

In some feasible implementation manners, when the first network device is an access network device, such as either of an RNC and an eNodeB, before step S111, the method in this embodiment of the present invention may further include:
detecting, by the access network device, an anonymous manner for minimization of drive tests;
if the anonymous manner is that a virtual identity of a terminal needs to be sent, after the terminal performing minimization of drive tests completes minimization of drive tests, sending, by the access network device, the virtual identity of the terminal performing minimization of drive tests and the minimization of drive tests information, where the minimization of drive tests information includes at least one of the minimization of drive tests result and the trace recording session reference; and
if the anonymous manner is another anonymous manner, performing subsequent operations according to the another anonymous manner.

In specific implementation, for the UTRAN network, two anonymous manners are included:
1. an anonymous manner that a virtual identity of a terminal needs to be sent; and
2. an anonymous manner that an identity of a terminal is not sent.

However, for the E-UTRAN network, three anonymous manners are included:
1. an anonymous manner that a virtual identity of a terminal needs to be sent;
2. an anonymous manner that an identity of a terminal is not sent; and
3. an anonymous manner that a TAC (Type Approval Code, type approval code) of an IMEI of a terminal is sent.

In some feasible implementation manners, when the first network device is a core network device, and the core network device includes, for example, any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF, before step S111, the method in this embodiment of the present invention may further include:
when it is detected on an access network side that the anonymous manner for minimization of drive tests is that a virtual identity of a terminal needs to be sent, receiving anonymous manner indication information from the access network side, where the anonymous manner indication information is used to indicate that the anonymous manner is that a virtual identity of a terminal needs to be sent.

Moreover, when the core network device includes any one of the serving GPRS support node SGSN, the mobile switching center MSC, the visitor location register VLR, the gateway GPRS support node GGSN, and the broadcast multicast service center BM-SC, the anonymous manner indication information is received from a radio network controller RNC on the access network side.

In specific implementation, the RNC may add the anonymous manner indication information to an uplink information exchange request message (UPLINK INFORMATION EXCHANGE REQUEST). Specifically, the RNC may add the anonymous manner indication information to a privacy indicator (such as a newly added Privacy indicator, where when a value of the Privacy indicator is a pseudonym, it indicates that the anonymous manner is that a virtual identity of a terminal needs to be sent, or when a value of the Privacy indicator is a TAC, it indicates that the anonymous manner is that a TAC of an IMSI needs to be sent; or, when a value of the Privacy indicator is 0, it indicates that the anonymous manner is that a virtual identity of a terminal needs to be sent, or when a value of the Privacy indicator is 1, it indicates that the anonymous manner is that a TAC of an IMSI needs to be sent) newly added in the uplink information exchange request message; or
the RNC adds a message body (for example, adds a message body, such as privacy indication) to the uplink information exchange request message, where the message body is used to indicate that the anonymous manner for the first network device is that a virtual identity of a terminal needs to be sent.

When the core network device is either of the mobility management entity MME and the call session control function entity CSCF, the anonymous manner indication information is received from an evolved base station eNodeB on the access network side. Further, the eNodeB may add the anonymous manner indication information to a cell traffic trace message (CELL TRAFFIC TRACE). Further, the eNodeB adds the anonymous manner indication information that the virtual identity of the terminal needs to be sent to a privacy indicator (such as a newly added Privacy indicator 2, a value of the Privacy indicator 2 is an immediate-virtual identity or a log-virtual identity) newly added in the cell traffic trace message; or, the eNodeB adds the anonymous manner indication information for minimization of drive tests by extending a value of an original privacy indicator (Privacy indicator) in the cell traffic trace message. For example, a value used in the Privacy indicator before extension is an immediate-TAC, a log-TAC, an immediate-virtual identity, or a log-virtual identity, where the former two values are used to indicate anonymity of the TAC, and the latter two values are used to indicate anonymity of the virtual identity.

In some feasible implementation manners, in step S110, occasions in which different network devices generate the virtual identity corresponding to the real identity of the terminal performing minimization of drive tests may be different. For example, when the first network device is the RNC, the RNC may generate, after selecting the terminal performing minimization of drive tests and before activating a minimization of drive tests function of the terminal performing minimization of drive tests, the virtual identity corresponding to the real identity of the terminal performing minimization of drive tests. However, when the first network device is the MME, the MME may generate, before sending an initial context setup request (initial context setup request) or a handover request (handover request), the virtual identity corresponding to the real identity of the terminal performing minimization of drive tests.

In some feasible implementation manners, in step S111, manners used by different network devices to send the virtual identity of the terminal performing minimization of drive tests and the minimization of drive tests information are different, where the minimization of drive tests information includes at least one of the minimization of drive tests result and the trace recording session reference. For example, when the first network device is the RNC or the eNodeB, when sending a measurement result of minimization of drive tests, the RNC may also send the virtual identity of the terminal performing minimization of drive tests. When the first network device is the MME, when sending a TR (Trace Reference, trace reference) cell identifier (Cell ID), the MME may also send the virtual identity of the terminal performing minimization of drive tests and the trace recording session reference TRSR. When the first network device is a terminal, when sending the measurement result of minimization of drive tests, the terminal may also send the virtual identity of the terminal.

It can be seen from the foregoing that, in some feasible implementation manners of the present invention, a first network device generates a virtual identity corresponding to a real identity of a terminal performing minimization of drive tests, where the real identity includes either of an international mobile equipment identity IMEI and an international mobile subscriber identity IMSI; and after the terminal performing minimization of drive tests completes minimization of drive tests, the first network device sends the virtual identity of the terminal performing minimization of drive tests and minimization of drive tests information, where the minimization of drive tests information includes at least one of a minimization of drive tests result and a trace recording session reference. In this embodiment of the present invention, because the identity of the terminal performing minimization of drive tests is sent with the minimization of drive tests information, a device (such as TCE) receiving the sent content can directly map some measurement results to same UE according to the sent content. In addition, in this embodiment of the present invention, the virtual identity instead of the real identity of the terminal is sent, which does not expose terminal privacy.

FIG. 2 is a schematic flowchart of a second embodiment of a processing method for minimization of drive tests according to the present invention. As shown in FIG. 2, the method may include:

Step S210: A first network device acquires, from a second network device, a virtual identity corresponding to a real identity of a terminal performing minimization of drive tests.

Step S211: After the terminal performing minimization of drive tests completes minimization of drive tests, the first network device sends the virtual identity of the terminal performing minimization of drive tests and minimization of drive tests information, where the minimization of drive tests information includes at least one of a minimization of drive tests result and a trace recording session reference.

In specific implementation, in step S210, the first network device may generate, during a process of minimization of drive tests, the virtual identity corresponding to the real identity of the terminal, or pre-generate, before minimization of drive tests is performed, the virtual identity corresponding to the real identity of the terminal.

In specific implementation, the real identity includes either of an IMEI (International Mobile Equipment Identity, international mobile equipment identity) and an IMSI (International Mobile Subscriber Identity, international mobile subscriber identity).

In specific implementation, the virtual identity includes: any one of a newly added dedicated identifier (for example, the newly added dedicated identifier may be recorded as an MDT-pseudo-ID), a TMSI (Temporary Mobile Station Identifier, temporary mobile station identifier), a GUTI (Globally Unique Temporary Identity, globally unique temporary identity), an evolved base station S1 interface application protocol identity (eNodeB S1-AP UE ID), a mobility management entity S1 interface application protocol identity (MME S1-AP UE ID), a TRSR (Trace Recording Session Reference, trace recording session reference) + CGI (UE's serving cell, user serving cell identifier), and a C-RNTI (Cell Radio Network Temporary Identity, cell radio network temporary identity), or a combination thereof, and an identifier of a device (such as an identifier of a TCE device) configured to receive a sending result of the virtual identity may further be bound to the virtual identity, so that the virtual identity can only be sent to a device to which the virtual identity is bound, thereby improving security.

In addition, the second network device is another network node except the first network device. For example, in specific implementation, the first network device and the second network device may vary in different network environments. For example, in an E-UTRAN network, when the first network device may include any one of a newly added device dedicated for sending the virtual identity, a mobility management entity MME, and a call session control function entity CSCF, the second network device may be a HSS (Home Subscriber Server, home subscriber server); when the first network device is an evolved base station eNodeB or the terminal, the second network device is any one of a newly added device dedicated for generating the virtual identity, a mobility management entity MME, and a call session control function entity CSCF. In a UTRAN network, when the first network device is a radio network controller RNC or the terminal, the second network device is any one of a newly added device dedicated for generating the virtual identity, a serving GPRS support node SGSN, a mobile switching center MSC, a visitor location register VLR, a gateway GPRS support node GGSN, and a broadcast multicast service center BM-SC.

In some feasible implementation manners, in step S210, after the second network device determines that user consent information exists, the first network device may acquire, from the second network device, the virtual identity corresponding to the real identity of the terminal. Alternatively, after step S210, before S211, the first network device determines whether user consent information exists; if the first network device determines that the user consent information exists, the first network device stores the virtual identity that is acquired from the second network device and is corresponding to the real identity of the terminal; and if the first network device determines that the user consent information does not exist, the first network device does not store the acquired virtual identity corresponding to the real identity of the terminal.

In some feasible implementation manners, when the first network device is an access network device, such as either of an RNC and an eNodeB, before step S211, the method in this embodiment of the present invention may further include:
detecting, by the access network device, an anonymous manner for minimization of drive tests;
if the anonymous manner is that a virtual identity of a terminal needs to be sent, after the terminal performing minimization of drive tests completes minimization of drive tests, sending, by the access network device, the virtual identity of the terminal performing minimization of drive tests and the minimization of drive tests information, where the minimization of drive tests information includes at least one of the minimization of drive tests result and the trace recording session reference; and
if the anonymous manner is another anonymous manner, performing subsequent operations according to the another anonymous manner.

In specific implementation, for the UTRAN network, two anonymous manners are included:
1. an anonymous manner that a virtual identity of a terminal needs to be sent; and
2. an anonymous manner that an identity of a terminal is not sent.

However, for the E-UTRAN network, three anonymous manners are included:
1. an anonymous manner that a virtual identity of a terminal needs to be sent;
2. an anonymous manner that an identity of a terminal is not sent; and
3. an anonymous manner that a TAC (Type Approval Code, type approval code) of an IMEI of a terminal is sent.

In some feasible implementation manners, when the first network device is a core network device, and the core network device includes, for example, any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF, before step S211, the method in this embodiment of the present invention may further include:
when it is detected on an access network side that the anonymous manner for minimization of drive tests is that a virtual identity of a terminal needs to be sent, receiving anonymous manner indication information from the access network side, where the anonymous manner indication information is used to indicate that the anonymous manner is that a virtual identity of a terminal needs to be sent.

Moreover, when the core network device includes any one of the serving GPRS support node SGSN, the mobile switching center MSC, the visitor location register VLR, the gateway GPRS support node GGSN, and the broadcast multicast service center BM-SC, the anonymous manner indication information is received from a radio network controller RNC on the access network side; and
in specific implementation, the RNC may add the anonymous manner indication information to an uplink information exchange request message (UPLINK INFORMATION EXCHANGE REQUEST), where, specifically, the RNC adds, to a privacy indicator (such as a newly added Privacy indicator, where when a value of the Privacy indicator is a pseudonym, it indicates that the anonymous manner is that a virtual identity of a terminal needs to be sent, or when a value of the Privacy indicator is a TAC, it indicates that the anonymous manner is that a TAC of an IMSI needs to be sent; or, when a value of the Privacy indicator is 0, it indicates that the anonymous manner is that a virtual identity of a terminal needs to be sent, or when a value of the Privacy indicator is 1, it indicates that the anonymous manner is that a TAC of an IMSI needs to be sent) newly added in the uplink information exchange request message, the anonymous manner indication information that the virtual identity of the terminal needs to be sent; or
the RNC may add a message body (for example, add a message body, such as privacy indication) to the uplink information exchange request message, where the message body is used to indicate that the anonymous manner is that a virtual identity of a terminal needs to be sent.

When the core network device is either of the mobility management entity MME and the call session control function entity CSCF, the anonymous manner indication information is received from an evolved base station eNodeB on the access network side. Further, the eNodeB may add the anonymous manner indication information to a cell traffic trace message (CELL TRAFFIC TRACE). Further, the eNodeB adds, to a privacy indicator (such as a newly added Privacy indicator 2, where a value of the Privacy indicator 2 is an immediate-virtual identity or a log-virtual identity) newly added in the cell traffic trace message, the anonymous manner indication information that the virtual identity of the terminal needs to be sent; or, the eNodeB adds the anonymous manner indication information for minimization of drive tests by extending a value of an original privacy indicator (Privacy indicator) in the cell traffic trace message. For example, a value used in the Privacy indicator before extension is an immediate-TAC, a log-TAC, an immediate-virtual identity, or a log-virtual identity, where the former two values are used to indicate anonymity of the TAC, and the latter two values are used to indicate anonymity of the virtual identity.

In some feasible implementation manners, in step S210, occasions in which different network devices acquire the virtual identity corresponding to the real identity of the terminal performing minimization of drive tests may be different. For example, when the first network device is an RNC and the second network device is an SGSN/MSC, the RNC may acquire, from a user context setup message sent by the SGSN or the MSC, the virtual identity corresponding to the real identity of the terminal. However, when the first network device is an MME and the second network device is an HSS, when receiving the user consent information delivered by the HSS to the MME, the MME may acquire the virtual identity corresponding to the real identity of the terminal.

In some feasible implementation manners, in step S211, manners used by different network devices to send the virtual identity of the terminal performing minimization of drive tests and the minimization of drive tests information are different, where the minimization of drive tests information includes at least one of the minimization of drive tests result and the trace recording session reference. For example, when the first network device is the RNC or the eNodeB, when sending a measurement result of minimization of drive tests, the RNC may also send the virtual identity of the terminal performing minimization of drive tests. When the first network device is an MME, when sending a TR (Trace Reference, trace reference) cell identifier (Cell ID), the MME may also send the virtual identity of the terminal performing minimization of drive tests and the trace recording session reference. When the first network device is a terminal, when sending the measurement result of minimization of drive tests, the terminal may also send the virtual identity of the terminal.

It can be seen from the foregoing that, in some feasible implementation manners of the present invention, a first network device acquires, from a second network device, a virtual identity corresponding to a real identity of a terminal performing minimization of drive tests, where the real identity includes either of an international mobile equipment identity IMEI and an international mobile subscriber identity IMSI; and after the terminal performing minimization of drive tests completes minimization of drive tests, the first network device sends the virtual identity of the terminal performing minimization of drive tests and minimization of drive tests information, where the minimization of drive tests information includes at least one of a minimization of drive tests result and a trace recording session reference. In this embodiment of the present invention, because the identity of the terminal performing minimization of drive tests is sent with the minimization of drive tests information, a device (such as TCE) receiving the sent content can directly map some measurement results to same UE according to the sent content. In addition, in this embodiment of the present invention, the virtual identity instead of the real identity of the terminal is sent, which does not expose terminal privacy.

The method in the embodiments of the present invention is further described below in detail by using examples with reference to a specific process of minimization of drive tests and a specific network device.

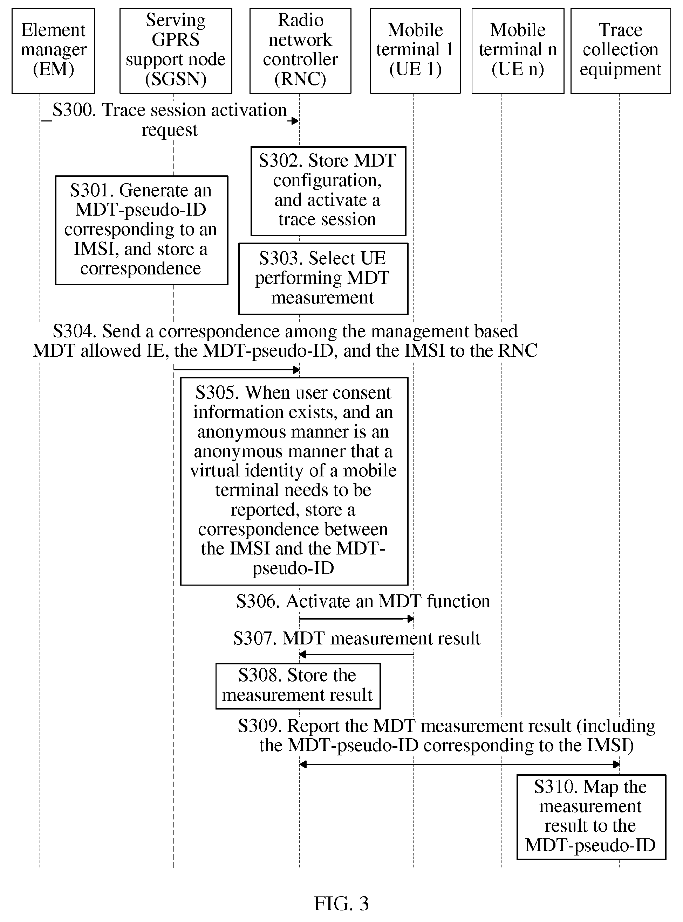

FIG. 3 is a schematic process and architectural diagram of a first embodiment of area based MDT in a UTRAN network. In this embodiment, an RNC is a first network device, and acquires, from a second network device such as an SGSN/MSC, a virtual identity of a terminal performing MDT measurement. Specifically, as shown in FIG. 3, this embodiment may include:

Step S300: An EM (Element Manager, element manager) entity sends a trace session activation request (Trace session Activation) to an RNC, where the request includes MDT configuration information. In specific implementation, the MDT configuration information in this embodiment of the present invention may include: a measurement range, that is, a cell list of an E-UTRAN, trace reference information, such as an IP address of TCE, an anonymous manner for MDT data, and the like.

Step S301: An SGSN/MSC generates an MDT virtual identity MDT-pseudo-ID corresponding to an IMSI, and stores a correspondence between the IMSI and the MDT virtual identity. In specific implementation, herein, corresponding MDT virtual identities may be generated for IMSIs of all terminals, or a corresponding MDT virtual identity is generated only for an IMSI of a terminal that is subsequently selected to perform MDT measurement.

Step S302: The RNC stores an MDT configuration parameter, and starts to activate a trace session.

Step S303: The RNC selects, according to area information and whether a management based MDT allowed IE (Management Based MDT Allowed IE) exists, UE performing MDT measurement.

Step S304: The SGSN/MSC sends a correspondence among the management based MDT allowed IE, the MDT-pseudo-ID, and the IMSI to the RNC during UE context setup (UE context setup); or, the SGSN does not send mapping, and directly sends the MDT-pseudo-ID by using an S1 message, and the RNC finds, according to a selection result in step S303, UE corresponding to the MDT-pseudo-ID.

Step S305: The RNC detects whether user consent information (user consent) exists, and detects an MDT anonymous manner in the RNC, and if the user consent information exists, and the anonymous manner is that a virtual identity of a terminal needs to be sent, stores a mapping relationship between the MDT-pseudo-ID and the IMSI. Certainly, the RNC may also not detect the user consent information or the anonymous manner, but directly store the correspondence, which is acquired from the SGSN/MSC, between the MDT-pseudo-ID and the IMSI, and send the correspondence to the RNC or the MDT-pseudo-ID.

Step S306: The RNC activates (MDT Activation) an MDT function of the selected UE.

Step S307: The selected UE sends an MDT measurement result to the RNC by using an RRC message.

Step S308: The RNC stores the MDT measurement result in an MDT record (record).

Step S309: When sending the MDT measurement result, the RNC also sends the MDT-pseudo-ID corresponding to the IMSI for which MDT measurement is performed, the MDT measurement result, and a cell in which the UE is located to TCE.

Step S310: The TCE maps the MDT-pseudo-ID to a measurement result.

In this embodiment, an RNC is a first network device in this embodiment of the present invention, and an SGSN/MSC is a second network device in this embodiment of the present invention. It can be seen that, in a UTRAN network, the RNC acquires, from the SGSN/MSC, a virtual identity MDT-pseudo-ID corresponding to a real identity IMSI of a terminal performing minimization of drive tests; and after the terminal performing minimization of drive tests completes minimization of drive tests, when the RNC sends an MDT measurement result, the RNC sends the MDT-pseudo-ID corresponding to an IMSI for which MDT measurement is performed, the MDT measurement result, and a cell in which UE is located to TCE. Because the RNC sends the identity of the terminal performing minimization of drive tests with minimization of drive tests information, a device (such as the TCE) receiving the sent content can directly map some measurement results to same UE according to the sent content. In addition, the RNC sends the virtual identity instead of the real identity of the terminal, which does not expose terminal privacy.

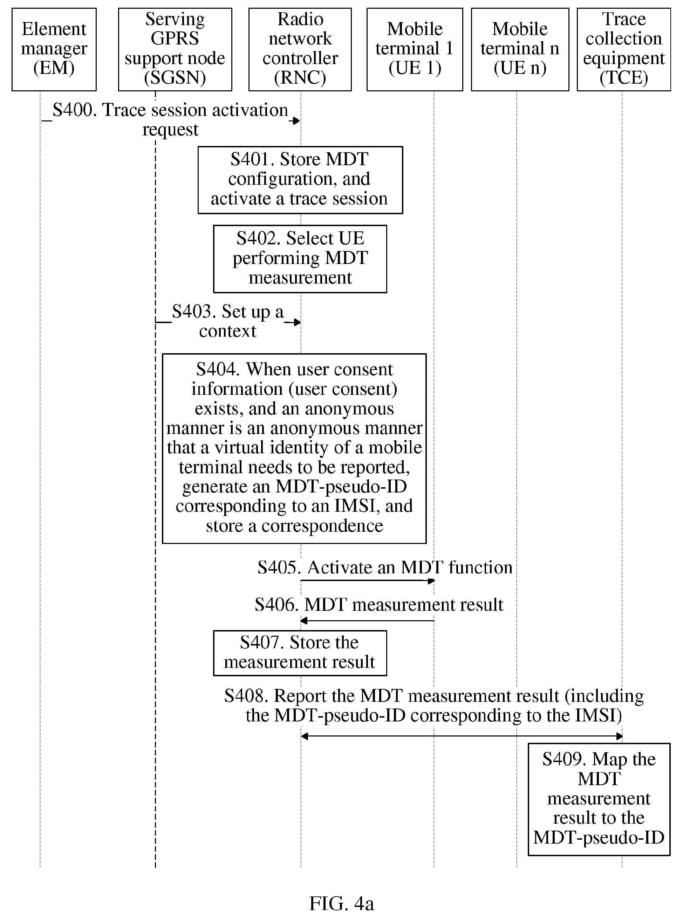

FIG. 4a is a schematic process and architectural diagram of a second embodiment of area based MDT in a UTRAN network. In this embodiment, an RNC is a first network device, and is configured to generate a virtual identity of a terminal performing MDT measurement. Specifically, as shown in FIG. 4a, this embodiment may include:

Step S400: An EM entity sends a trace session activation request (Trace session Activation) to an RNC, where the request includes MDT configuration information.

Step S401: The RNC stores an MDT configuration parameter, and starts to activate a trace session.

Step S402: The RNC selects, according to area information and whether a management based MDT allowed IE (Management Based MDT Allowed IE) exists, UE performing MDT measurement.

Step S403: An SGSN/MSC sends a UE context setup (UE context setup) message to the RNC.

Step S404: The RNC detects whether user consent information (user consent) exists, and detects an MDT anonymous manner in the RNC, and if the user consent information exists, and the anonymous manner is that a virtual identity of a terminal needs to be sent, the RNC generates an MDT virtual identity MDT-pseudo-ID corresponding to an IMSI, and stores a correspondence between the IMSI and the MDT virtual identity. In specific implementation, herein, corresponding MDT virtual identities may be generated for IMSIs of all terminals, or a corresponding MDT virtual identity is generated only for an IMSI of the terminal that is selected in step S402 to perform MDT measurement.

Step S405: The RNC activates (MDT Activation) an MDT function of the selected UE.

Step S406: The selected UE sends an MDT measurement result to the RNC by using an RRC message.

Step S407: The RNC stores the MDT measurement result in an MDT record (record).

Step S408: When sending the MDT measurement result, the RNC also sends the MDT-pseudo-ID corresponding to the IMSI for which MDT measurement is performed, the MDT measurement result, and a cell in which the UE is located to TCE.

Step S409: The TCE maps the MDT-pseudo-ID to a measurement result.

In this embodiment, an RNC is a first network device in this embodiment of the present invention, and the RNC generates a virtual identity MDT-pseudo-ID corresponding to a real identity IMSI of a terminal performing minimization of drive tests; and after the terminal performing minimization of drive tests completes minimization of drive tests, when the RNC sends an MDT measurement result, the RNC sends, to TCE, the MDT-pseudo-ID corresponding to the IMSI for which MDT measurement is performed, the MDT measurement result, a cell in which UE is located, and a correspondence between them. Because the RNC sends the identity of the terminal performing minimization of drive tests with minimization of drive tests information, a device (such as the TCE) receiving the sent content can directly map some measurement results to same UE according to the sent content. In addition, the RNC sends the virtual identity instead of the real identity of the terminal, which does not expose terminal privacy.

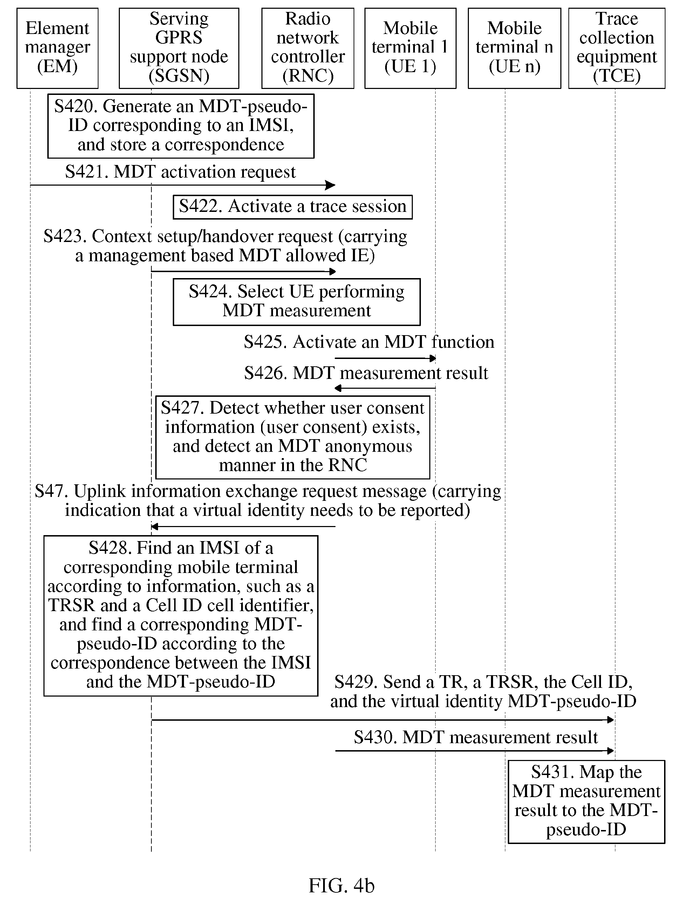

FIG. 4b is a schematic process and architectural diagram of a third embodiment of area based MDT in a UTRAN network. In this embodiment, an SGSN/MSC is a first network device, and is configured to generate a virtual identity of a terminal performing MDT measurement. Specifically, as shown in FIG. 4b, this embodiment may include:

Step S420: An SGSN/MSC generates an MDT virtual identity MDT-pseudo-ID corresponding to an IMSI, and stores a correspondence between the IMSI and the MDT virtual identity. In specific implementation, herein, corresponding MDT virtual identities may be generated for IMSIs of all terminals, or a corresponding MDT virtual identity is generated only for an IMSI of a terminal that is subsequently selected to perform MDT measurement.

Step S421: An EM (Element Manager, element manager) entity sends a trace session activation request (Trace session Activation) to an RNC, where the request includes MDT configuration information. In specific implementation, the MDT configuration information in this embodiment of the present invention may include: a measurement range, that is, a cell list of an E-UTRAN, trace reference information, such as an IP address of TCE, an anonymous manner for MDT data, and the like.

Step S422: The RNC stores an MDT configuration parameter, and starts to activate a trace session.

Step S423: The SGSN/MSC sends a correspondence among a management based MDT allowed IE, the MDT-pseudo-ID, and the IMSI to the RNC during UE context setup (UE context setup); or, the SGSN does not send mapping, and directly sends the MDT-pseudo-ID by using an S1 message, and the RNC finds, according to a selection result in step S423, UE corresponding to the MDT-pseudo-ID.

Step S424: The RNC selects, according to area information and whether a management based MDT allowed IE (Management Based MDT Allowed IE) exists, UE performing MDT measurement.

Step S425: The RNC activates an MDT function of the selected UE.

Step S426: The UE sends an MDT measurement result to the RNC by using an RRC message.

Step S427: The RNC detects whether user consent information (user consent) exists, and detects an MDT anonymous manner in the RNC, and if the user consent information exists, and the anonymous manner is that a virtual identity of a terminal needs to be sent, when sending an uplink information exchange request message (UPLINK INFORMATION EXCHANGE REQUEST), the RNC indicates, to the SGSN/MSC, the anonymous manner that the virtual identity of the terminal needs to be sent.

Step S428: After receiving, from the RNC, the anonymous manner that a virtual identity of a terminal needs to be sent, the SGSN/MSC finds an IMSI of a corresponding terminal according to information, such as a TRSR and a Cell ID cell identifier, and finds a corresponding MDT-pseudo-ID according to a correspondence between the IMSI and the MDT-pseudo-ID.

Step S429: The SGSN/MSC sends a TR (Trace Reference, trace reference), a TRSR, the Cell ID, and the virtual identity MDT-pseudo-ID to a TCE.

Step S430: When reporting the MDT measurement result, the RNC sends the MDT measurement result and the like to the TCE.

Step S431: The TCE maps the virtual identity MDT-pseudo-ID to the MDT measurement result according to the received virtual identity MDT-pseudo-ID, TRSR, and MDT measurement result.

It should be noted that, this embodiment is described by using an example in which the virtual identity is the MDT-pseudo-ID; in specific implementation, if the virtual identity is another virtual identity that can be directly generated by the RNC, similar to the embodiment in FIG. 4a, the RNC may directly generate the virtual identity corresponding to the real identity of the terminal performing MDT measurement, and when sending the MDT measurement result, also send the virtual identity. Alternatively, the RNC may send the generated virtual identity to a core network device (such as an SGSN), and when sending minimization of drive tests information, the core network device also sends the virtual identity.

In this embodiment, an SGSN/MSC is a first network device in this embodiment of the present invention, and generates a virtual identity MDT-pseudo-ID corresponding to a real identity IMSI of a terminal performing minimization of drive tests; and after the terminal performing minimization of drive tests completes minimization of drive tests, the SGSN/MSC sends information, such as a TR (Trace Reference, trace reference), a TRSR, a Cell ID, and the virtual identity MDT-pseudo-ID. Because the SGSN/MSC sends the identity of the terminal performing minimization of drive tests with minimization of drive tests information, a device (such as TCE) receiving the sent content can directly map some measurement results to same UE according to the sent content. In addition, the SGSN/MSC sends the virtual identity instead of the real identity of the terminal, which does not expose terminal privacy.

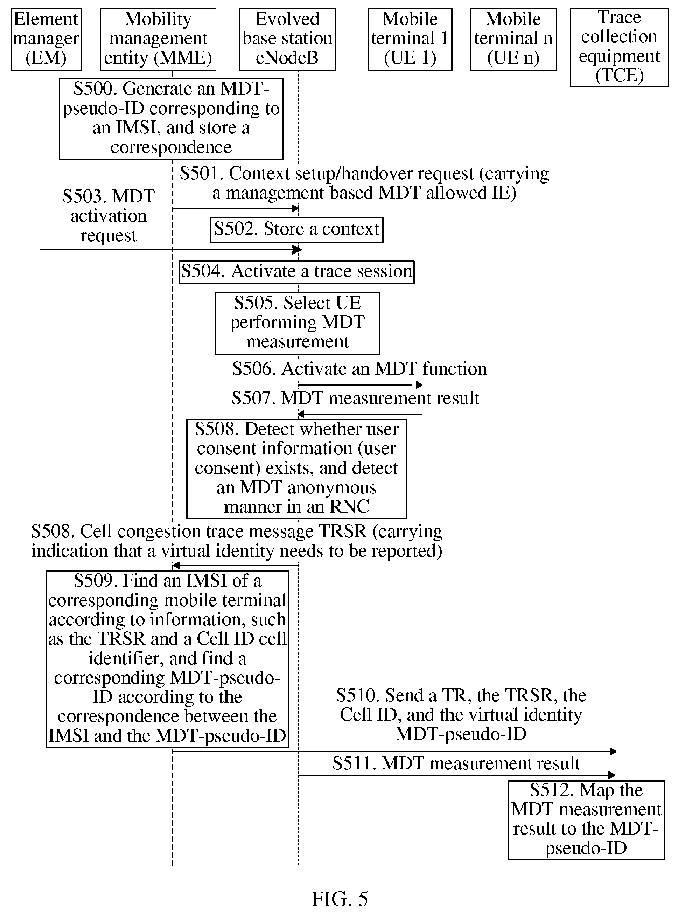

FIG. 5 is a schematic process and architectural diagram of a first embodiment of area based MDT in an E-UTRAN network. In this embodiment, an MME is a first network device, and is configured to generate a virtual identity of a terminal performing MDT measurement. Specifically, as shown in FIG. 5, this embodiment may include:

Step S500: The MME generates a virtual identity MDT-pseudo-ID corresponding to an IMSI, and stores a correspondence between the IMSI and the MDT-pseudo-ID. In specific implementation, in the step, an MDT-pseudo-ID may be generated for an IMSI of each terminal, or an MDT-pseudo-ID may be generated only for a terminal that needs to subsequently perform MDT measurement.

Step S501: The MME sends a management based MDT allowed IE (Management Based MDT Allowed IE) to an eNodeB in an initial context setup request/handover request (initial context setup request/handover request).

Step S502: The eNodeB stores a context of UE.

Step S503: An EM sends an MDT activation request to the eNodeB, and adds MDT configuration information to the activation request.

Step S504: The eNodeB stores an MDT configuration parameter, and starts to activate a trace session.

Step S505: The eNodeB selects, according to area information and whether a management based MDT allowed IE (Management Based MDT Allowed IE) exists, UE performing MDT measurement.

Step S506: The eNodeB activates an MDT function of the selected UE.

Step S507: The UE sends an MDT measurement result to the eNodeB by using an RRC message, and the eNodeB stores the MDT measurement result in an MDT record MDT record.

Step S508: The eNodeB detects whether user consent information (user consent) exists, and detects an MDT anonymous manner in an RNC, and if the user consent information exists, and the anonymous manner is that a virtual identity of a terminal needs to be sent, when sending a cell congestion trace message TRSR (Trace Recording Session Reference, trace recording session reference), the eNodeB indicates, to the MME, the anonymous manner that the virtual identity of the terminal needs to be sent.

Step S509: After receiving, from the eNodeB, the anonymous manner that a virtual identity of a terminal needs to be sent, the MME finds an IMSI of a corresponding terminal according to information, such as the TRSR and the Cell ID cell identifier, and finds a corresponding MDT-pseudo-ID according to a correspondence between the IMSI and the MDT-pseudo-ID.

Step S510: The MME sends a TR (Trace Reference, trace reference), the TRSR, the Cell ID, and the virtual identity MDT-pseudo-ID to TCE.

Step S5111: When reporting an MDT measurement result, the eNodeB sends the MDT measurement result and the like to the TCE.

Step S512: The TCE maps the virtual identity MDT-pseudo-ID to the MDT measurement result according to the received virtual identity MDT-pseudo-ID, TRSR, and MDT measurement result.

It should be noted that, this embodiment is described by using an example in which the virtual identity is the MDT-pseudo-ID; in specific implementation, if the virtual identity is a TRSR + CGI or another virtual identity that can be directly generated by the eNodeB, similar to the embodiment in FIG. 4a, the eNodeB may directly generate the virtual identity corresponding to the real identity of the terminal performing MDT measurement, and when sending the MDT measurement result, also send the virtual identity. Alternatively, the eNodeB may send the generated virtual identity to a core network device (such as an MME), and when sending minimization of drive tests information, the core network device also sends the virtual identity.

It should be noted that, in specific implementation, in step S509, the MME may also send the MDT-pseudo-ID that is found to the eNodeB. In this way, in step S511, when sending the MDT measurement result, the eNodeB may also send the MDT-pseudo-ID and a correspondence between the MDT-pseudo-ID and the MDT measurement result. However, in step S510, the MME does not need to send the MDT-pseudo-ID and the correspondence between the MDT-pseudo-ID and the MDT measurement result.

In this embodiment, an MME is a first network device in this embodiment of the present invention, and generates a virtual identity MDT-pseudo-ID corresponding to a real identity IMSI of a terminal performing minimization of drive tests; and after the terminal performing minimization of drive tests completes minimization of drive tests, the MME sends information, such as a TR (Trace Reference, trace reference), a TRSR, a Cell ID, and the virtual identity MDT-pseudo-ID. Because the MME sends the identity of the terminal performing minimization of drive tests with minimization of drive tests information, a device (such as TCE) receiving the sent content can directly map some measurement results to same UE according to the sent content. In addition, the MME sends the virtual identity instead of the real identity of the terminal, which does not expose terminal privacy.

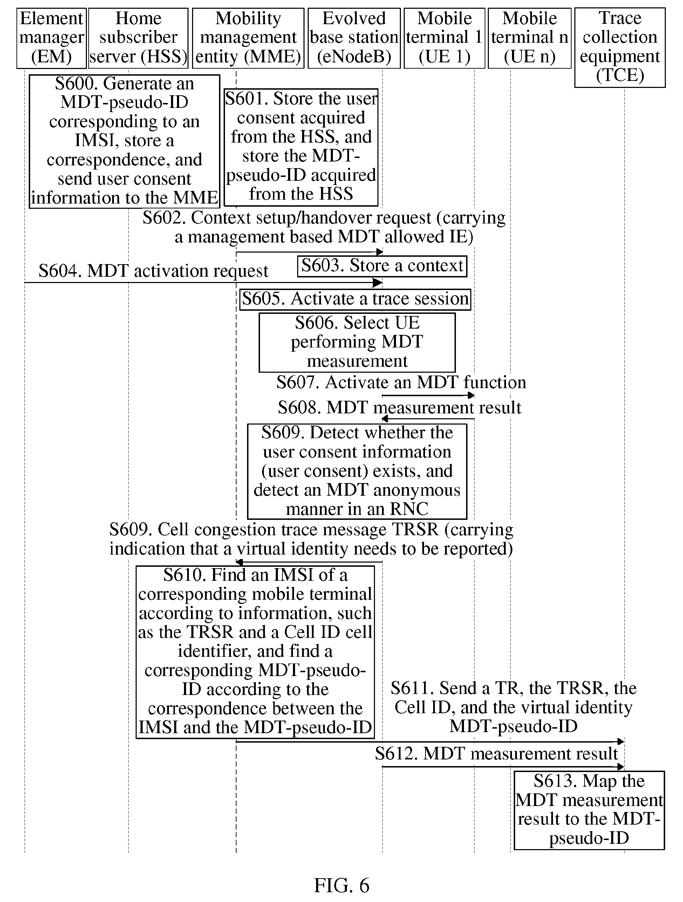

FIG. 6 is a schematic process and architectural diagram of a second embodiment of area based MDT in an E-UTRAN network. In this embodiment, an MME is a first network device, and acquires, from a second network device such as an HSS, a virtual identity of a terminal performing MDT measurement. Specifically, as shown in FIG. 6, this embodiment may include:

Step S600: An HSS generates a virtual identity MDT-pseudo-ID corresponding to an IMSI, stores a correspondence between the IMSI and the MDT-pseudo-ID, sends user consent information to an MME, and when sending the user consent information, sends the MDT-pseudo-ID and/or the correspondence between the IMSI and the MDT-pseudo-ID to the MME. In specific implementation, in the step, an MDT-pseudo-ID may be generated for an IMSI of each terminal, or an MDT-pseudo-ID may be generated only for a terminal that needs to subsequently perform MDT measurement.

Step S601: The MME stores user consent acquired from the HSS, and stores the MDT-pseudo-ID and/or the correspondence between the IMSI and the MDT-pseudo-ID that are acquired from the HSS.

Step S602: The MME sends a management based MDT allowed IE (Management Based MDT Allowed IE) to an eNodeB in an initial context setup request/handover request (initial context setup request/handover request).

Step S603: The eNodeB stores a context of UE.

Step S604: An EM sends an MDT activation request to the eNodeB, and adds MDT configuration information to the activation request.

Step S605: The eNodeB stores an MDT configuration parameter, and starts to activate a trace session.

Step S606: The eNodeB selects, according to area information and whether a management based MDT allowed IE (Management Based MDT Allowed IE) exists, UE performing MDT measurement.

Step S607: The eNodeB activates an MDT function of the selected UE.

Step S608: The UE sends an MDT measurement result to the eNodeB by using an RRC message, and the eNodeB stores the MDT measurement result in an MDT record MDT record.

Step S609: The eNodeB detects whether user consent information (user consent) exists, and detects an MDT anonymous manner in an RNC, and if the user consent information exists, and the anonymous manner is that a virtual identity of a terminal needs to be sent, when sending a cell congestion trace message TRSR (Trace Recording Session Reference, trace recording session reference), the eNodeB indicates, to the MME, the anonymous manner that the virtual identity of the terminal needs to be sent.

Step S610: The MME determines, according to indication of the eNodeB, that the MDT anonymous manner is that a virtual identity of a terminal needs to be sent, finds an IMSI of a corresponding terminal according to information, such as the TRSR and a Cell ID cell identifier, and finds a corresponding MDT-pseudo-ID according to the correspondence between the IMSI and the MDT-pseudo-ID.

Step S611: The MME sends a TR (Trace Reference, trace reference), the TRSR, the Cell ID, and the virtual identity MDT-pseudo-ID to TCE.

Step S612: When reporting the MDT measurement result, the eNodeB sends the MDT measurement result and the like to the TCE.

Step S613: The TCE maps the virtual identity MDT-pseudo-ID to the MDT measurement result according to the received virtual identity MDT-pseudo-ID, TRSR, and MDT measurement result.

It should be noted that, in specific implementation, in step S610, the MME may also send, to the eNodeB, the MDT-pseudo-ID that is found. In this way, in step S612, when sending the MDT measurement result, the eNodeB may also send the MDT-pseudo-ID. However, in step S611, the MME does not need to send the MDT- pseudo-ID.

In this embodiment, an MME is a first network device in this embodiment of the present invention, and generates a virtual identity MDT-pseudo-ID corresponding to a real identity IMSI of a terminal performing minimization of drive tests; and after the terminal performing minimization of drive tests completes minimization of drive tests, the MME sends information, such as a TR (Trace Reference, trace reference), a TRSR, a Cell ID, and the identity MDT-pseudo-ID. Because the MME sends the identity of the terminal performing minimization of drive tests with minimization of drive tests information, a device (such as TCE) receiving the sent content can directly map some measurement results to same UE according to the sent content. In addition, the MME sends the virtual identity instead of the real identity of the terminal, which does not expose terminal privacy.

Correspondingly, embodiments of the present invention disclose apparatus embodiments that can be used to perform the method embodiments of the present invention. The apparatus embodiments of the present invention are enumeratively described below with reference to the accompanying drawings.

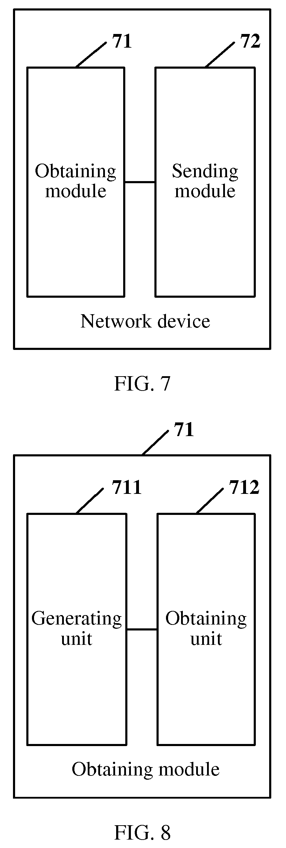

FIG. 7 is a schematic structural composition diagram of an embodiment of a network device (corresponding to the first network device in the method embodiments) according to the present invention. As shown in FIG. 7, the network device in the present invention may include: an obtaining module 71 and a sending module 72.

The obtaining module 71 is configured to obtain a virtual identity corresponding to a real identity of a terminal.

The sending module 72 is configured to send the virtual identity, obtained by the obtaining module 71, of the terminal performing minimization of drive tests and minimization of drive tests information, where the minimization of drive tests information includes at least one of a minimization of drive tests result and a trace recording session reference.

In specific implementation, the real identity includes either of an IMEI (International Mobile Equipment Identity, international mobile equipment identity) and an IMSI (International Mobile Subscriber Identity, international mobile subscriber identity).

In specific implementation, the virtual identity includes: any one of a newly added dedicated identifier (for example, the newly added dedicated identifier may be recorded as an MDT-pseudo-ID), a TMSI (Temporary Mobile Station Identifier, temporary mobile station identifier), a GUTI (Globally Unique Temporary Identity, globally unique temporary identity), an evolved base station S1 interface application protocol identity (eNodeB S1-AP UE ID), a mobility management entity S1 interface application protocol identity (MME S1-AP UE ID), a TRSR (Trace Recording Session Reference, trace recording session reference) + CGI (UE's serving cell, user serving cell identifier), and a C-RNTI (Cell Radio Network Temporary Identity, cell radio network temporary identity), or a combination thereof, and an identifier of a device (such as an identifier of a TCE device) configured to receive a sending result of the virtual identity may further be bound to the virtual identity, so that the virtual identity can only be sent to a device to which the virtual identity is bound, thereby improving security.

Further, referring to FIG. 8, in specific implementation, the obtaining module 71 may include at least one of a generating unit 711 and an obtaining unit 712.

The generating unit 711 is configured to generate the virtual identity corresponding to the real identity of the terminal.

The obtaining unit 712 is configured to acquire, from another network node (corresponding to the second network device in the method embodiments) except the network device, the virtual identity corresponding to the real identity of the terminal.

In specific implementation, when the obtaining module 71 includes the generating unit 711, the network device in the present invention may include any one of multiple devices in different network environments. For example, in a UTRAN network, the network device in the present invention may include any one of a newly added device dedicated for generating the virtual identity, an SGSN (Serving GPRS Support Node, serving GPRS support node), an MSC (Mobile Switching Centre, mobile switching centre), a GGSN (Gateway GPRS Support Node, gateway GPRS support node), a VLR (Visitor Location Register, visitor location register), a BM-SC (Broadcast multicast service center, broadcast multicast service center), an RNC (Radio Network Controller, radio network controller), and a terminal. However, in an E-UTRAN (Evolved Universal Terrestrial Radio Access Network, evolved universal terrestrial radio access network) network, the network device in the present invention may include any one of a newly added device dedicated for generating the virtual identity, an MME (Mobility Management Entity, mobility management entity), a CSCF (Call Session Control Function, call session control function), an eNodeB (evolved Node B, evolved base station), and a terminal.

When the obtaining module 71 includes the obtaining unit 712, the network device and the another network node except the network device in the present invention may also include any one of multiple devices in different network environments. For example, in the E-UTRAN network, the network device in the present invention includes any one of a newly added device dedicated for sending the virtual identity, a mobility management entity MME, and a call session control function entity CSCF. In this case, the another network node except the network device may be an HSS (Home Subscriber Server, home subscriber server). When the network device in the present invention is an evolved base station eNodeB or the terminal, the another network node except the network device is any one of a newly added device dedicated for generating the virtual identity, a mobility management entity MME, and a call session control function entity CSCF. In the UTRAN network, when the network device in the present invention is either of a radio network controller RNC and the terminal, the another network node except the network device is any one of a newly added device dedicated for generating the virtual identity, a serving GPRS support node SGSN, a mobile switching center MSC, a visitor location register VLR, a gateway GPRS support node GGSN, and a broadcast multicast service center BM-SC.

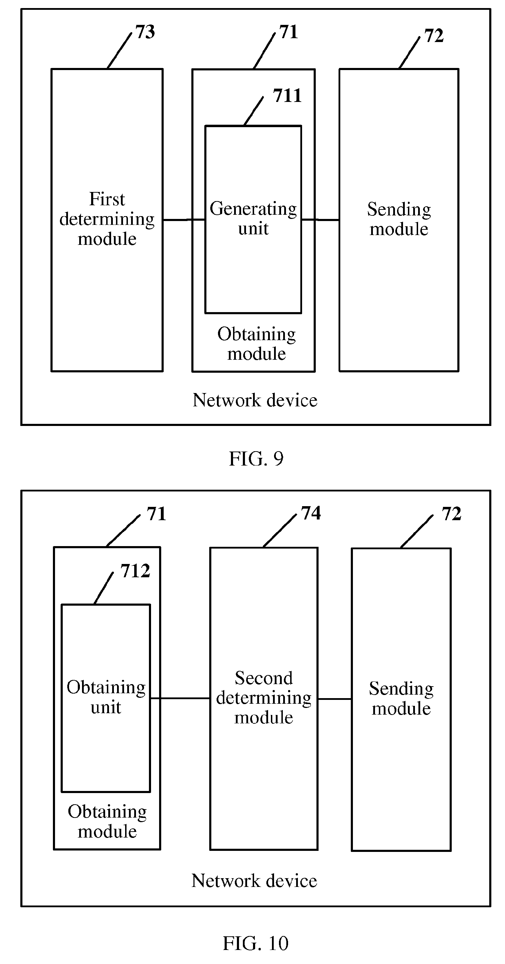

Further, referring to FIG. 9, in some feasible implementation manners, when the obtaining module 71 includes the generating unit 711, the network device may further include: a first determining module 73, configured to determine whether user consent information (user consent) exists. If the first determining module determines that the user consent information exists, the generating unit 711 generates the virtual identity corresponding to the real identity of the terminal. If the first determining module determines that the user consent information does not exist, the generating unit 711 does not generate the virtual identity corresponding to the real identity of the terminal performing minimization of drive tests. A function of the first determining module 73 is generating virtual identity information with user consent, which further ensures security of user privacy.

Further, in some feasible implementation manners, when the obtaining module 71 includes the obtaining unit 712, the obtaining unit 712 is specifically configured to: after the another network node except the network device determines that the user consent information exists, acquire, from the another network node except the network device, the virtual identity corresponding to the real identity of the terminal.

Further, referring to FIG. 10, in some feasible implementation manners, when the obtaining module 71 includes the obtaining unit 712, the network device may further include:
a second determining module 74, configured to determine whether the user consent information exists; if it is determined that the user consent information exists, store the virtual identity that is acquired from the another network node except the network device and is corresponding to the real identity of the terminal; and if it is determined that the user consent information does not exist, skip storing the acquired virtual identity corresponding to the real identity of the terminal.

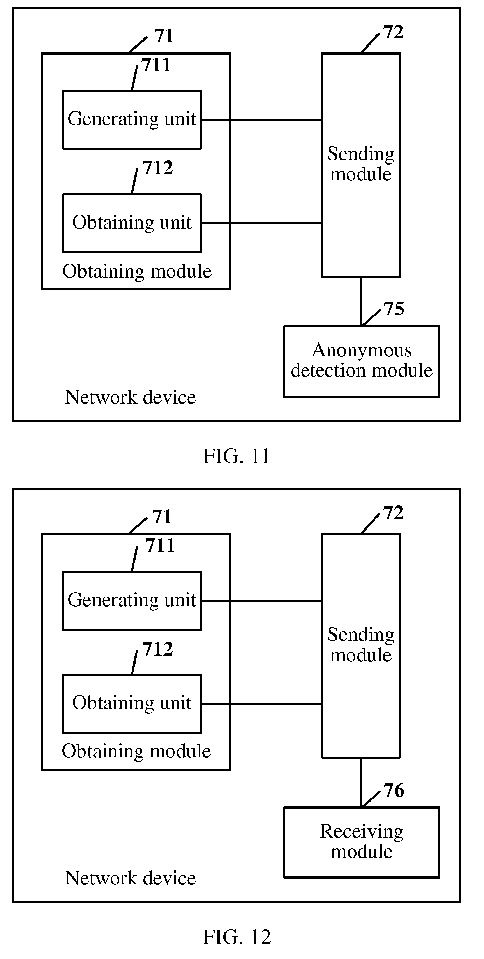

Further, referring to FIG. 11, in some feasible implementation manners, the network device in the present invention may be an access network device. In this case, the network device in the present invention may further include:
an anonymous detection module 75, configured to detect an anonymous manner for minimization of drive tests, where
if the anonymous detection module 75 detects that the anonymous manner is that a virtual identity of a terminal needs to be sent, the sending module 72 sends the virtual identity of the terminal performing minimization of drive tests and the minimization of drive tests information, where in specific implementation, the access network device includes either of a radio network controller RNC and an evolved base station eNodeB; and when the access network device is the RNC, the another network node except the network device includes any one of a serving GPRS support node SGSN, a mobile switching center MSC, a visitor location register VLR, a gateway GPRS support node GGSN, and a broadcast multicast service center BM-SC; or when the access network device is the eNodeB, the another network node except the network device includes either of a mobility management entity MME and a call session control function entity CSCF; and if the anonymous detection module 75 detects that the anonymous manner is another anonymous manner, the network device in the present invention may perform subsequent operations according to the another anonymous manner.

In specific implementation, for the UTRAN network, two anonymous manners are included:
1. an anonymous manner that a virtual identity of a terminal needs to be sent; and
2. an anonymous manner that an identity of a terminal is not sent.

However, for the E-UTRAN network, three anonymous manners are included:
1. an anonymous manner that a virtual identity of a terminal needs to be sent;
2. an anonymous manner that an identity of a terminal is not sent; and
3. an anonymous manner that a TAC (Type Approval Code, type approval code) of an IMEI of a terminal is sent.

Further, referring to FIG. 12, in some feasible implementation manners, the network device in the present invention may be a core network device, and the network device may further include: a receiving module 76, configured to receive anonymous manner indication information from an access network side, where the anonymous manner indication information is used to indicate that the anonymous manner is that a virtual identity of a terminal needs to be sent.

In specific implementation, the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF; and when the network device includes any one of the serving GPRS support node SGSN, the mobile switching center MSC, the visitor location register VLR, the gateway GPRS support node GGSN, and the broadcast multicast service center BM-SC, the receiving module 76 is specifically configured to receive the anonymous manner indication information from a radio network controller RNC on the access network side; and
in specific implementation, the RNC may add the anonymous manner indication information to an uplink information exchange request message (UPLINK INFORMATION EXCHANGE REQUEST), where specifically, the RNC may add the anonymous manner indication information to a privacy indicator (such as a newly added Privacy indicator, where when a value of the Privacy indicator is a pseudonym, it indicates that the anonymous manner is that a virtual identity of a terminal needs to be sent, or when a value of the Privacy indicator is a TAC, it indicates that the anonymous manner is that a TAC of an IMSI needs to be sent; or, when a value of the Privacy indicator is 0, it indicates that the anonymous manner is that a virtual identity of a terminal needs to be sent, or when a value of the Privacy indicator is 1, it indicates that the anonymous manner is that a TAC of an IMSI needs to be sent) newly added in the uplink information exchange request message; or
the RNC adds a message body (for example, adds a message body, such as privacy indication) to the uplink information exchange request message, where the message body is used to indicate that the anonymous manner for the first network device is that a virtual identity of a terminal needs to be sent.

When the network device is either of a mobility management entity MME and a call session control function entity CSCF, the receiving module 76 is specifically configured to receive, from an evolved base station eNodeB on the access network side, the anonymous manner indication information that a virtual identity of a terminal needs to be sent. In some feasible implementation manners, the eNodeB may add the anonymous manner indication information to a cell traffic trace message (CELL TRAFFIC TRACE).

Further, the eNodeB may add the anonymous manner indication information to a privacy indicator (such as a newly added Privacy indicator 2, a value of the Privacy indicator 2 is an immediate-virtual identity or a log-virtual identity) newly added in the cell traffic trace message; or, the eNodeB adds the anonymous manner indication information for minimization of drive tests by extending a value of an original privacy indicator (Privacy indicator) in the cell traffic trace message. For example, a value used in the Privacy indicator before extension is an immediate-TAC, a log-TAC, an immediate-virtual identity, or a log-virtual identity, where the former two values are used to indicate anonymity of the TAC, and the latter two values are used to indicate anonymity of the virtual identity.

Further, when the obtaining module 71 includes the obtaining unit 712, when the core network device used as the network device is either of a mobility management entity MME and a call session control function entity CSCF, the another network node except the network device is a home subscriber server HSS or an evolved base station eNodeB.

In some feasible implementation manners, the network device in the present invention may further be a terminal. In this case, when the obtaining module 71 of the terminal includes the obtaining unit 712, the another network node except the network device may include a core network device, and the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF.

In specific implementation, occasions in which different network devices generate the virtual identity corresponding to the real identity of the terminal performing minimization of drive tests may be different. For example, when the network device in the present invention is the RNC, the RNC may generate, after selecting the terminal performing minimization of drive tests and before activating a minimization of drive tests function of the terminal performing minimization of drive tests, the virtual identity corresponding to the real identity of the terminal performing minimization of drive tests. However, when the network device in the present invention is the MME, the MME may generate, before sending an initial context setup request (initial context setup request) or a handover request (handover request), the virtual identity corresponding to the real identity of the terminal performing minimization of drive tests.

In some feasible implementation manners, manners used by different network devices to send the virtual identity of the terminal performing minimization of drive tests and the minimization of drive tests information are different, where the minimization of drive tests information includes at least one of the minimization of drive tests result and the trace recording session reference. For example, when the network device in the present invention is an RNC or an eNodeB, when sending a measurement result of minimization of drive tests, the RNC may also send the virtual identity of the terminal performing minimization of drive tests. When the network device in the present invention is the MME, when sending a TR (Trace Reference, trace reference) cell identifier (Cell ID), the MME may also send the virtual identity of the terminal performing minimization of drive tests and the trace recording session reference TRSR. When the network device in the present invention is a terminal, when sending the measurement result of minimization of drive tests, the terminal may also send the virtual identity of the terminal.

It can be seen from the foregoing that, in some feasible implementation manners of the present invention, a network device obtains a virtual identity corresponding to a real identity of a terminal performing minimization of drive tests; and after the terminal performing minimization of drive tests completes minimization of drive tests, a first network device sends the virtual identity of the terminal performing minimization of drive tests and minimization of drive tests information, where the minimization of drive tests information includes at least one of a minimization of drive tests result and a trace recording session reference. In this embodiment of the present invention, because the identity of the terminal performing minimization of drive tests is sent with the minimization of drive tests information, a device (such as TCE) receiving the sent content can directly map some measurement results to same UE according to the sent content. In addition, in this embodiment of the present invention, the virtual identity instead of the real identity of the terminal is sent, which does not expose terminal privacy.

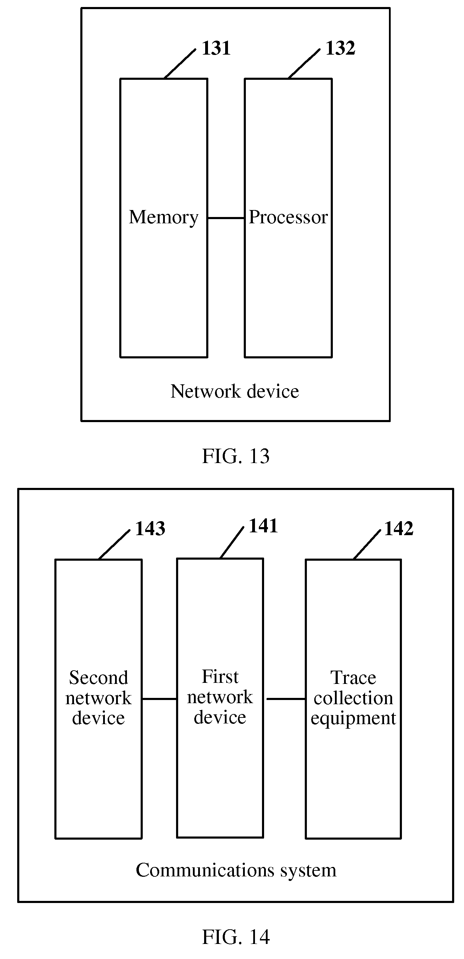

FIG. 13 is a schematic structural composition diagram of another embodiment of a network device (corresponding to the first network device in the method embodiments) according to the present invention. As shown in FIG. 13, the network device in the present invention may include: a memory 131 and a processor 132, where the memory 131 stores program code, and the processor 132 invokes the program code stored in the memory, to perform the following operations:
obtaining a virtual identity corresponding to a real identity of a terminal; and
sending the virtual identity of a terminal performing minimization of drive tests and minimization of drive tests information, where the minimization of drive tests information includes at least one of a minimization of drive tests result and a trace recording session reference.

In specific implementation, the real identity includes either of an IMEI (International Mobile Equipment Identity, international mobile equipment identity) and an IMSI (International Mobile Subscriber Identity, international mobile subscriber identity).

In specific implementation, the virtual identity includes: any one of a newly added dedicated identifier (for example, the newly added dedicated identifier may be recorded as an MDT-pseudo-ID), a TMSI (Temporary Mobile Station Identifier, temporary mobile station identifier), a GUTI (Globally Unique Temporary Identity, globally unique temporary identity), an evolved base station S1 interface application protocol identity (eNodeB S1-AP UE ID), a mobility management entity S1 interface application protocol identity (MME S1-AP UE ID), a TRSR (Trace Recording Session Reference, trace recording session reference) + CGI (UE's serving cell, user serving cell identifier), and a C-RNTI (Cell Radio Network Temporary Identity, cell radio network temporary identity), or a combination thereof. An identifier of a device (such as an identifier of TCE) configured to receive a sending result of the virtual identity may further be bound to the virtual identity, so that the virtual identity can only be sent to a device to which the virtual identity is bound, thereby improving security.

In some feasible implementation manners, that the processor 132 obtains a virtual identity corresponding to a real identity of a terminal specifically includes:
generating the virtual identity corresponding to the real identity of the terminal; or
acquiring, from another network node except the network device, the virtual identity corresponding to the real identity of the terminal.

In specific implementation, when the processor 132 generates the virtual identity corresponding to the real identity of the terminal, the network device in the present invention may include any one of multiple devices in different network environments. For example, in a UTRAN network, the network device in the present invention may include any one of a newly added device dedicated for generating the virtual identity, an SGSN (Serving GPRS Support Node, serving GPRS support node), an MSC (Mobile Switching Centre, mobile switching centre), a GGSN (Gateway GPRS Support Node, gateway GPRS support node), a VLR (Visitor Location Register, visitor location register), a BM-SC (Broadcast multicast service center, broadcast multicast service center), an RNC (Radio Network Controller, radio network controller), and a terminal. However, in an E-UTRAN (Evolved Universal Terrestrial Radio Access Network, evolved universal terrestrial radio access network) network, the network device in the present invention may include any one of a newly added device dedicated for generating the virtual identity, an MME (Mobility Management Entity, mobility management entity), a CSCF (Call Session Control Function, call session control function), an eNodeB (evolved Node B, evolved base station), and a terminal.

When the processor 132 in the present invention acquires, from the another network node except the network device, the virtual identity corresponding to the real identity of the terminal, the network device and the another network node except the network device in the present invention may also include any one of multiple devices in different network environments. For example, in the E-UTRAN network, the network device in the present invention includes any one of a newly added device dedicated for sending the virtual identity, a mobility management entity MME, and a call session control function entity CSCF. In this case, the another network node except the network device may be an HSS (Home Subscriber Server, home subscriber server). When the network device in the present invention is an evolved base station eNodeB or the terminal, the another network node except the network device is any one of a newly added device dedicated for generating the virtual identity, a mobility management entity MME, and a call session control function entity CSCF. In the UTRAN network, when the network device in the present invention is either of a radio network controller RNC and the terminal, the another network node except the network device is any one of a newly added device dedicated for generating the virtual identity, a serving GPRS support node SGSN, a mobile switching center MSC, a visitor location register VLR, a gateway GPRS support node GGSN, and a broadcast multicast service center BM-SC.

In some feasible implementation manners, before generating the virtual identity corresponding to the real identity of the terminal, the processor 132 performs the following operations:
determining whether user consent information exists, and if it is determined that the user consent information exists, generating the virtual identity corresponding to the real identity of the terminal, thereby ensuring that virtual identity information is generated with user consent, and further ensuring security of user privacy.

In some feasible implementation manners, after the another network node except the network device determines that the user consent information exists, the processor 132 acquires, from the another network node except the network device, the virtual identity corresponding to the real identity of the terminal; and
in some feasible implementation manners, after acquiring the virtual identity corresponding to the real identity of the terminal from the another network node except the network device, the processor 132 further performs the following operations:
determining whether the user consent information exists; if it is determined that the user consent information exists, storing the virtual identity that is acquired from the another network node except the network device and is corresponding to the real identity of the terminal; and if it is determined that the user consent information does not exist, skipping storing the acquired virtual identity corresponding to the real identity of the terminal.

In some feasible implementation manners, the network device in the present invention may be an access network device; and
before sending the virtual identity of the terminal performing minimization of drive tests, the processor 132 further performs the following operations:
detecting an anonymous manner for minimization of drive tests; and
if the anonymous manner is that a virtual identity of a terminal needs to be sent, sending the virtual identity of the terminal performing minimization of drive tests and the minimization of drive tests information.

In some feasible implementation manners, the access network device includes either of a radio network controller RNC and an evolved base station eNodeB; and
when the network device is the RNC, the another network node except the network device includes any one of a serving GPRS support node SGSN, a mobile switching center MSC, a visitor location register VLR, a gateway GPRS support node GGSN, and a broadcast multicast service center BM-SC; or
when the network device is the eNodeB, the another network node except the network device includes either of a mobility management entity MME and a call session control function entity CSCF.

In specific implementation, when the processor 132 detects that the anonymous manner is another anonymous manner, the network device in the present invention may perform subsequent operations according to the another anonymous manner.

In specific implementation, for the UTRAN network, two anonymous manners are included:
1. an anonymous manner that a virtual identity of a terminal needs to be sent; and
2. an anonymous manner that an identity of a terminal is not sent.

However, for the E-UTRAN network, three anonymous manners are included:
1. an anonymous manner that a virtual identity of a terminal needs to be sent;
2. an anonymous manner that an identity of a terminal is not sent; and
3. an anonymous manner that a TAC (Type Approval Code, type approval code) of an IMEI of a terminal is sent.

In some feasible implementation manners, the network device in the present invention may be a core network device, and before sending the virtual identity of the terminal performing minimization of drive tests, the processor 132 further performs the following operation:
receiving anonymous manner indication information from an access network side, where the anonymous manner indication information is used to indicate that the anonymous manner is that a virtual identity of a terminal needs to be sent.

In some feasible implementation manners, the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF; and
when the network device includes any one of the serving GPRS support node SGSN, the mobile switching center MSC, the visitor location register VLR, the gateway GPRS support node GGSN, and the broadcast multicast service center BM-SC, the processor is specifically configured to receive the anonymous manner indication information from a radio network controller RNC on the access network side; or
when the network device is either of the mobility management entity MME and the call session control function entity CSCF, the processor specifically receives the anonymous manner indication information from an evolved base station eNodeB on the access network side.

In specific implementation, the RNC may add the anonymous manner indication information to an uplink information exchange request message (UPLINK INFORMATION EXCHANGE REQUEST), where specifically, the RNC may add the anonymous manner indication information to a privacy indicator (such as a newly added Privacy indicator, where when a value of the Privacy indicator is a pseudonym, it indicates that the anonymous manner is that a virtual identity of a terminal needs to be sent, or when a value of the Privacy indicator is a TAC, it indicates that the anonymous manner is that a TAC of an IMSI needs to be sent; or, when a value of the Privacy indicator is 0, it indicates that the anonymous manner is that a virtual identity of a terminal needs to be sent, or when a value of the Privacy indicator is 1, it indicates that the anonymous manner is that a TAC of an IMSI needs to be sent) newly added in the uplink information exchange request message; or
the RNC adds a message body (for example, adds a message body, such as privacy indication) to the uplink information exchange request message, where the message body is used to indicate that the anonymous manner for the first network device is that a virtual identity of a terminal needs to be sent.

When the core network device is either of the mobility management entity MME and the call session control function entity CSCF, the anonymous manner indication information is received from an evolved base station eNodeB on the access network side. Further, the eNodeB may add, to a cell traffic trace message (CELL TRAFFIC TRACE), the anonymous manner indication information that the virtual identity of the terminal needs to be sent. Further, the eNodeB adds the anonymous manner indication information to a privacy indicator (such as a newly added Privacy indicator 2, where a value of the Privacy indicator 2 is an immediate-virtual identity or a log-virtual identity) newly added in the cell traffic trace message; or, the eNodeB adds the anonymous manner indication information for minimization of drive tests by extending a value of an original privacy indicator (Privacy indicator) in the cell traffic trace message. For example, a value used in the Privacy indicator before extension is an immediate-TAC, a log-TAC, an immediate-virtual identity, or a log-virtual identity, where the former two values are used to indicate anonymity of the TAC, and the latter two values are used to indicate anonymity of the virtual identity.

In some feasible implementation manners, when the processor 132 acquires the virtual identity from the another network node except the network device, and when the network device is either of a mobility management entity MME and a call session control function entity CSCF, the another network node except the network device is a home subscriber server HSS or an evolved base station eNodeB.

In some feasible implementation manners, the network device in the present invention may be the terminal performing minimization of drive tests. In this case, when the terminal acquires the virtual identity from the another network node except the network device, the another network node except the network device may be a core network device, where the core network device includes any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF.

In specific implementation, occasions in which different network devices generate the virtual identity corresponding to the real identity of the terminal performing minimization of drive tests may be different. For example, when the network device in the present invention is the RNC, the RNC may generate, after selecting the terminal performing minimization of drive tests, before activating a minimization of drive tests function of the terminal performing minimization of drive tests, the virtual identity corresponding to the real identity of the terminal performing minimization of drive tests. However, when the network device in the present invention is the MME, the MME may generate, before sending an initial context setup request (initial context setup request) or a handover request (handover request), the virtual identity corresponding to the real identity of the terminal performing minimization of drive tests.

In some feasible implementation manners, manners used by different network devices to send the virtual identity of the terminal performing minimization of drive tests and the minimization of drive tests information are different, where the minimization of drive tests information includes at least one of the minimization of drive tests result and the trace recording session reference. For example, when the network device in the present invention is an RNC or an eNodeB, when sending a measurement result of minimization of drive tests, the RNC may also send the virtual identity of the terminal performing minimization of drive tests. When the network device in the present invention is the MME, when sending a TR (Trace Reference, trace reference) cell identifier (Cell ID), the MME may also send the virtual identity of the terminal performing minimization of drive tests and the trace recording session reference TRSR. When the network device in the present invention is a terminal, when sending the measurement result of minimization of drive tests, the terminal may also send the virtual identity of the terminal.

Further, the present invention further discloses a network system. FIG. 14 is a schematic structural composition diagram of an embodiment of a communications system according to the present invention. As shown in FIG. 14, the network system in the present invention may include a first network device 141, trace collection equipment 142, and another network node 143 except the network device, where the first network device 141 may be either of the first network device in the method embodiments of the present invention and the network device in the apparatus embodiment of the present invention, the trace collection equipment 142 is configured to receive a virtual identity, sent by the network device, of a terminal performing minimization of drive tests and minimization of drive tests information, and map, according to the virtual identity of the terminal performing minimization of drive tests and the minimization of drive tests information, the virtual identity of the terminal performing minimization of drive tests to a minimization of drive tests result of the terminal performing minimization of drive tests, where the minimization of drive tests information includes at least one of the minimization of drive tests result and a trace recording session reference; the another network node 143 except the network device is configured to generate the virtual identity corresponding to the real identity of the terminal. In some feasible implementation manners, when the first network device 141 may generate the virtual identity corresponding to the real identity of the terminal, the communications system in the present invention may not include the another network node 143 except the network device.

To sum up, in this embodiment of the present invention, before or during a process of minimization of drive tests, a first network device generates a virtual identity corresponding to a real identity of a terminal performing minimization of drive tests, or acquires, from another network node except the network device, a virtual identity corresponding to a real identity of a terminal performing minimization of drive tests; and after the terminal performing minimization of drive tests completes minimization of drive tests, the first network device sends the virtual identity of the terminal performing minimization of drive tests and minimization of drive tests information. In this embodiment of the present invention, because the identity of the terminal performing minimization of drive tests is sent with the minimization of drive tests information, a device (such as TCE) receiving the sent content can directly map some measurement results to same UE according to the sent content. In addition, in this embodiment of the present invention, the virtual identity instead of the real identity of the terminal is sent, which does not expose terminal privacy.

In specific implementation, the present invention further provides a computer storage medium. The computer storage medium may store a program, and when the program is executed, some or all steps in the embodiments of the method provided in the present invention may be included. The storage medium may be a magnetic disc, an optical disc, a read-only memory (Read-Only Memory, ROM), or a random access memory (Random Access Memory, RAM).

Obviously, a person skilled in the art can make various modifications and variations to the present invention without departing from the spirit and scope of the present invention. In this way, the present invention is intended to cover these modifications and variations provided that they fall within the scope defined by the claims of the present invention and their equivalent technologies.

## Claims

**1.** A processing method for minimization of drive tests, comprising:
obtaining, by a first network device, a virtual identity, wherein the virtual identity is corresponding to a real identity of a terminal; and
sending, by the first network device, the virtual identity of the terminal performing minimization of drive tests and minimization of drive tests information, wherein the minimization of drive tests information comprises at least one of a minimization of drive tests result and a trace recording session reference.

**2.** The processing method for minimization of drive tests according to claim 1, wherein the obtaining, by a first network device, a virtual identity comprises:
generating, by the first network device, the virtual identity; or
acquiring, by the first network device, the virtual identity from a second network device.

**3.** The processing method for minimization of drive tests according to claim 2, wherein before the generating, by the first network device, the virtual identity, the method further comprises:
determining, by the first network device, whether user consent information exists, and when the user consent information exists, generating the virtual identity; or
after the second network device determines that user consent information exists, acquiring, by the first network device, the virtual identity from the second network device; or
after the acquiring, by the first network device, the virtual identity from a second network device, the method further comprises:
determining, by the first network device, whether user consent information exists, and when the user consent information exists, storing the virtual identity acquired from the second network device.

**4.** The processing method for minimization of drive tests according to any one of claims 1 to 3, wherein the first network device is an access network device; and
before the sending, by the first network device, the virtual identity of a terminal performing minimization of drive tests and minimization of drive tests information, the method further comprises:
detecting, by the first network device, an anonymous manner for minimization of drive tests; and
when the anonymous manner is that a virtual identity of a terminal needs to be sent, sending, by the first network device, the virtual identity of the terminal performing minimization of drive tests and the minimization of drive tests information.

**5.** The processing method for minimization of drive tests according to claim 4, wherein the access network device comprises either of a radio network controller RNC and an evolved base station eNodeB; and
when the first network device is the RNC, the second network device comprises any one of a serving GPRS support node SGSN, a mobile switching center MSC, a visitor location register VLR, a gateway GPRS support node GGSN, and a broadcast multicast service center BM-SC; or
when the first network device is the eNodeB, the second network device comprises either of a mobility management entity MME and a call session control function entity CSCF.

**6.** The processing method for minimization of drive tests according to any one of claims 1 to 3, wherein the first network device is a core network device, and before the sending, by the first network device, the virtual identity of a terminal performing minimization of drive tests and minimization of drive tests information, the method further comprises:
receiving anonymous manner indication information from an access network side, wherein the anonymous manner indication information is used to indicate that an anonymous manner is that a virtual identity of a terminal needs to be sent.

**7.** The processing method for minimization of drive tests according to claim 6, wherein the core network device comprises any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF; and
when the first network device comprises any one of the serving GPRS support node SGSN, the mobile switching center MSC, the visitor location register VLR, the gateway GPRS support node GGSN, and the broadcast multicast service center BM-SC, the anonymous manner indication information is received from a radio network controller RNC on the access network side; or
when the first network device is either of the mobility management entity MME and the call session control function entity CSCF, the anonymous manner indication information is received from an evolved base station eNodeB on the access network side.

**8.** The processing method for minimization of drive tests according to claim 7, wherein the anonymous manner indication information is carried in an uplink information exchange request message sent by the RNC.

**9.** The processing method for minimization of drive tests according to claim 8, wherein the anonymous manner indication information is carried in a privacy indicator newly added in the uplink information exchange request message; or
the anonymous manner indication information is a message body newly added in the uplink information exchange request message.

**10.** The processing method for minimization of drive tests according to claim 7, wherein the anonymous manner indication information is carried in a cell traffic trace message sent by the eNodeB.

**11.** The processing method for minimization of drive tests according to claim 10, wherein the anonymous manner indication information is carried in a privacy indicator newly added in the cell traffic trace message; or
the anonymous manner indication information is an extended value of an original privacy indicator in the cell traffic trace message.

**12.** The processing method for minimization of drive tests according to claim 7, wherein when the core network device is either of a mobility management entity MME and a call session control function entity CSCF, the second network device is a home subscriber server HSS or an evolved base station eNodeB.

**13.** The processing method for minimization of drive tests according to claim 2, wherein
the first network device is the terminal performing minimization of drive tests, and the second network device comprises a core network device, wherein the core network device comprises any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF.

**14.** The processing method for minimization of drive tests according to any one of claims 1 to 11, wherein the virtual identity comprises: any one of a newly added dedicated identifier, a temporary mobile station identifier TMSI, a globally unique temporary identity GUTI, an evolved base station S1 interface application protocol identity eNodeB S1-AP UE ID, a mobility management entity S1 interface application protocol identity MME S1-AP UE ID, a trace recording session reference + user serving cell identifier TRSR + CGI, and a cell radio network temporary identity C-RNTI, or a combination thereof.

**15.** A network device, comprising:
an obtaining module, configured to obtain a virtual identity, wherein the virtual identity is corresponding to a real identity of a terminal; and
a sending module, configured to send the virtual identity, obtained by the obtaining module, of the terminal performing minimization of drive tests and minimization of drive tests information, wherein the minimization of drive tests information comprises at least one of a minimization of drive tests result and a trace recording session reference.

**16.** The network device according to claim 15, wherein the obtaining module comprises at least one of a generating unit and an obtaining unit, wherein
the generating unit is configured to generate the virtual identity; and
the obtaining unit is configured to acquire the virtual identity from another network node except the network device.

**17.** The network device according to claim 16, wherein when the obtaining module comprises the generating unit, the network device further comprises:
a first determining module, configured to determine whether user consent information exists, wherein when the user consent information exists, the generating unit generates the virtual identity.

**18.** The network device according to claim 16, wherein when the obtaining module comprises the obtaining unit, the obtaining unit is specifically configured to: after the another network node except the network device determines that user consent information exists, acquire the virtual identity from the another network node except the network device; or
the network device further comprises:
a second determining module, configured to determine whether user consent information exists, and when the user consent information exists, store the virtual identity acquired from the another network node except the network device.

**19.** The network device according to any one of claims 16 to 18, wherein the network device is an access network device, and the network device further comprises:
an anonymous detection module, configured to detect an anonymous manner for minimization of drive tests, wherein
if the anonymous detection module detects that the anonymous manner is that a virtual identity of a terminal needs to be sent, the sending module sends the virtual identity of the terminal performing minimization of drive tests and the minimization of drive tests information.

**20.** The network device according to claim 19, wherein the access network device comprises either of a radio network controller RNC and an evolved base station eNodeB; and
when the access network device is the RNC, the another network node except the network device comprises any one of a serving GPRS support node SGSN, a mobile switching center MSC, a visitor location register VLR, a gateway GPRS support node GGSN, and a broadcast multicast service center BM-SC; or
when the access network device is the eNodeB, the another network node except the network device comprises either of a mobility management entity MME and a call session control function entity CSCF.

**21.** The network device according to any one of claims 16 to 18, wherein the network device is a core network device, and the network device further comprises:
a receiving module, configured to receive anonymous manner indication information from an access network side, wherein the anonymous manner indication information is used to indicate that an anonymous manner is that a virtual identity of a terminal needs to be sent.

**22.** The network device according to claim 21, wherein the core network device comprises any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF; and
when the network device comprises any one of the serving GPRS support node SGSN, the mobile switching center MSC, the visitor location register VLR, the gateway GPRS support node GGSN, and the broadcast multicast service center BM-SC, the receiving module is specifically configured to receive the anonymous manner indication information from a radio network controller RNC on the access network side; or
when the network device is either of the mobility management entity MME and the call session control function entity CSCF, the receiving module is specifically configured to receive the anonymous manner indication information from an evolved base station eNodeB on the access network side.

**23.** The processing method for minimization of drive tests according to claim 22, wherein the anonymous manner indication information is carried in an uplink information exchange request message sent by the RNC.

**24.** The processing method for minimization of drive tests according to claim 23, wherein the anonymous manner indication information is carried in a privacy indicator newly added in the uplink information exchange request message; or
the anonymous manner indication information is a message body newly added in the uplink information exchange request message.

**25.** The network device according to claim 22, wherein the anonymous manner indication information is carried in a cell traffic trace message sent by the eNodeB.

**26.** The network device according to claim 25, wherein the anonymous manner indication information is carried in a privacy indicator newly added in the cell traffic trace message; or
the anonymous manner indication information is an extended value of an original privacy indicator in the cell traffic trace message.

**27.** The network device according to claim 22, wherein when the core network device is either of a mobility management entity MME and a call session control function entity CSCF, the another network node except the network device is a home subscriber server HSS or an evolved base station eNodeB.

**28.** The network device according to claim 16, wherein the network device is the terminal performing minimization of drive tests, and the another network node except the network device comprises a core network device, where the core network device comprises any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF.

**29.** The network device according to any one of claims 15 to 28, wherein the virtual identity comprises: any one of a newly added dedicated identifier, a temporary mobile station identifier TMSI, a globally unique temporary identity GUTI, an evolved base station S1 interface application protocol identity eNodeB S1-AP UE ID, a mobility management entity S1 interface application protocol identity MME S1-AP UE ID, a trace recording session reference + user serving cell identifier TRSR + CGI, and a cell radio network temporary identity C-RNTI, or a combination thereof.

**30.** A communications system, comprising the network device according to any one of claims 15 to 29 and trace collection equipment, wherein the trace collection equipment is configured to receive a virtual identity, sent by the network device, of a terminal performing minimization of drive tests and minimization of drive tests information, and map the virtual identity of the terminal performing minimization of drive tests to a minimization of drive tests result of the terminal performing minimization of drive tests, wherein the minimization of drive tests information comprises at least one of the minimization of drive tests result and a trace recording session reference.

**31.** The communications system according to claim 30, wherein when the network device comprises an obtaining unit, the communications system further comprises:
another network node except the network device, configured to generate the virtual identity corresponding to a real identity of the terminal.

**32.** A network device, comprising a memory and a processor, wherein the memory stores program code, and the processor invokes the program code stored in the memory, to perform the following operations:
obtaining a virtual identity, wherein the virtual identity is corresponding to a real identity of a terminal; and
sending the virtual identity of the terminal performing minimization of drive tests and minimization of drive tests information, wherein the minimization of drive tests information comprises at least one of a minimization of drive tests result and a trace recording session reference.

**33.** The network device according to claim 32, wherein the obtaining, by the processor, the virtual identity specifically comprises:
generating the virtual identity of the terminal; or
acquiring the virtual identity from another network node except the network device.

**34.** The network device according to claim 33, wherein before generating the virtual identity, the processor performs the following operations: determining whether user consent information exists, and when the user consent information exists, generating the virtual identity; or
after the another network node except the network device determines that user consent information exists, acquiring, by the processor, the virtual identity from the another network node except the network device; or
after acquiring the virtual identity from the another network node except the network device, the processor further performs the following operations:
determining whether user consent information exists, and when the user consent information exists, storing the virtual identity acquired from the another network node except the network device.

**35.** The network device according to any one of claims 32 to 34, wherein the network device is an access network device; and
before sending the virtual identity of the terminal performing minimization of drive tests, the processor further performs the following operations:
detecting an anonymous manner for minimization of drive tests; and
when the anonymous manner is that a virtual identity of a terminal needs to be sent, sending the virtual identity of the terminal performing minimization of drive tests and the minimization of drive tests information.

**36.** The network device according to claim 35, wherein the access network device comprises either of a radio network controller RNC and an evolved base station eNodeB; and
when the network device is the RNC, the another network node except the network device comprises any one of a serving GPRS support node SGSN, a mobile switching center MSC, a visitor location register VLR, a gateway GPRS support node GGSN, and a broadcast multicast service center BM-SC; or
when the network device is the eNodeB, the another network node except the network device comprises either of a mobility management entity MME and a call session control function entity CSCF.

**37.** The network device according to any one of claims 32 to 34, wherein the network device is a core network device, and before sending the virtual identity of the terminal performing minimization of drive tests and the minimization of drive tests information, the processor further performs the following operation:
receiving anonymous manner indication information from an access network side, wherein the anonymous manner indication information is used to indicate that an anonymous manner is that a virtual identity of a terminal needs to be sent.

**38.** The network device according to claim 37, wherein the core network device comprises any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF; and
when the network device comprises any one of the serving GPRS support node SGSN, the mobile switching center MSC, the visitor location register VLR, the gateway GPRS support node GGSN, and the broadcast multicast service center BM-SC, the processor is specifically configured to receive the anonymous manner indication information from a radio network controller RNC on the access network side; or
when the network device is either of the mobility management entity MME and the call session control function entity CSCF, the processor is specifically configured to receive the anonymous manner indication information from an evolved base station eNodeB on the access network side.

**39.** The processing method for minimization of drive tests according to claim 38, wherein the anonymous manner indication information is carried in an uplink information exchange request message sent by the RNC.

**40.** The processing method for minimization of drive tests according to claim 39, wherein the anonymous manner indication information is carried in a privacy indicator newly added in the uplink information exchange request message; or
the anonymous manner indication information is a message body newly added in the uplink information exchange request message.

**41.** The network device according to claim 38, wherein the anonymous manner indication information is carried in a cell traffic trace message sent by the eNodeB.

**42.** The network device according to claim 41, wherein the anonymous manner indication information is carried in a privacy indicator newly added in the cell traffic trace message; or
the anonymous manner indication information is an extended value of an original privacy indicator in the cell traffic trace message.

**43.** The network device according to claim 42, wherein when the network device is either of a mobility management entity MME and a call session control function entity CSCF, the another network node except the network device is a home subscriber server HSS or an evolved base station eNodeB.

**43.** The network device according to claim 33, wherein the network device is the terminal performing minimization of drive tests, and the another network node except the network device comprises a core network device, wherein the core network device comprises any one of a serving GPRS support node SGSN, a mobile switching center MSC, a visitor location register VLR, a gateway GPRS support node GGSN, a broadcast multicast service center BM-SC, a mobility management entity MME, and a call session control function entity CSCF.

**44.** The network device according to any one of claims 32 to 43, wherein the virtual identity comprises: any one of a newly added dedicated identifier, a temporary mobile station identifier TMSI, a globally unique temporary identity GUTI, an evolved base station S1 interface application protocol identity eNodeB S1-AP UE ID, a mobility management entity S1 interface application protocol identity MME S1-AP UE ID, a trace recording session reference + user serving cell identifier TRSR + CGI, and a cell radio network temporary identity C-RNTI, or a combination thereof.

**45.** A computer program product, comprising a computer readable medium, wherein the computer readable medium comprises a set of program code that is used to perform the method according to any one of claims 1 to 14.
